# EUROPEAN PATENT APPLICATION

(11) **EP 1 981 200 A1**
(43) Date of publication of application: **15.10.2008**
(21) Application number: 07715044.9
(22) Date of filing: 28.02.2007
(51) Int. Cl.: H04L 1/00, H04B 7/04, H04B 7/06, H04B 7/26, H04J 15/00

(54) **RADIO TRANSMISSION DEVICE AND RADIO TRANSMISSION METHOD**

(30) Priority: 01.03.2006 JP 2006055516
(71) Applicant: MATSUSHITA ELECTRIC INDUSTRIAL CO., LTD., Osaka 571-8501 (JP)
(72) Inventor: YUDA, Yasuaki Matsushita Electric Industrial Co., Ltd., 2-1-61, Shiromi, Chuo-ku Osaka 540-6207 (JP); HOSHINO, Masayuki Matsushita Electric Industrial Co., Ltd., 2-1-61, Shiromi, Chuo-ku Osaka 540-6207 (JP); IMAI, Tomohiro Matsushita Electric Industrial Co., Ltd., 2-1-61, Shiromi, Chuo-ku Osaka 540-6207 (JP); KIMURA, Ryohei Matsushita Electric Industrial Co., Ltd., 2-1-61, Shiromi, Chuo-ku Osaka 540-6207 (JP); IMAMURA, Daichi Matsushita Electric Industrial Co., Ltd., 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2007/053754
(87) International publication number: WO 2007/102363

(57) **Abstract**

Disclosed is a radio transmission device capable of improving a transmission stream error resistance and preventing lowering of a throughput of a communication system. In this device, according to the feedback information from the radio reception device, a repetition control unit (110) decides ranking of each stream, sets a higher repletion rate for a higher stream. This is instructed to repetition units (103-1 to 103-N). According to the repletion rate decided by a repletion control unit (110), the repletion units (103-1 to 103-N) subjects the stream outputted from modulation units (102-1 to 102-N) to a repetition process, and outputs it to transmission RF units (104-1 to 104-N).

## Description

### Technical Field

The present invention relates to a radio transmitting apparatus and radio transmitting method used in, for example, a MIMO communication system.

### Background Art

Recently, in mobile communication systems represented by mobile telephones, modes of service have diversified, and it is demanded to transmit a great amount of data including not only speech data but also static images and moving images. Further, the MIMO system (Multi-Input/Multi-Output) is actively studied as a scheme for high speed transmission of the great amount of data in the next generation mobile communication system. The MIMO system uses a plurality of antennas on both the transmitting end and the receiving end, and transmits and receives a plurality of individual streams at the same time in the same frequency band, providing an advantage of increasing communication system throughput without expanding the frequency bandwidth.

Further, one of techniques for improving the transmission rate in the MIMO system is SDM (Space Division Multiplexing). SDM refers to a technique of spatially multiplexing and transmitting a plurality of streams transmitted from a plurality of antennas and demultiplexing streams in the receiving apparatus. According to this SDM, it is possible to increase throughput by multiples of the number of transmitting antennas, compared to the SISO (Single Input Single Output) system.

With this SDM, different streams are mixed and received, and therefore these streams need to be demultiplexed. Although various receiving schemes for the SDM system are studied, the SIC (Successive Interference Cancellation) scheme, represented by BLAST (Bell Laboratories layered Space-Time), is focused upon as a potent candidate. This is because, compared to other receiving schemes, the SIC scheme requires a relatively low amount of arithmetic operation processing, shows relatively good reception characteristics and is therefore very practical. Other receiving schemes include, for example, the ZF (Zero Forcing) and MMSE (Minimum Mean Square Error) filtering schemes, the MLD (Maximum Likelihood Decoding) scheme, and etc.

Patent Document 1 discloses an example of a technique of adopting the SIC receiving scheme in an SDM system. This is the technique of carrying out adaptive modulation on a per stream basis using the SIC scheme and feeding back CSI (Channel State Information) based on the SINR in processing of each stream and carrying out adoptive modulation based on this CSI. Patent Document 1 discloses that throughput can be improved by adaptively controlling the coding rate and modulation scheme of error correction code according to the channel state of each stream.
Patent Document 1: Japanese Translation of PCT Application Laid-Open No.2004-533169

### Disclosure of Invention

### Problems to be Solved by the Invention

However, there is a problem with the SIC scheme that, if an error occurs in the stream that is processed first, this error propagates to other streams and causes a decrease in communication system throughput. That is, in the processing of the SIC scheme, first, one stream (for example, stream 1) is extracted from a received signal by filtering, and, next, this extracted stream 1 is cancelled from the received signal. Then, by repeating this processing, all of the streams are demultiplexed. However, for example, if an error occurs in stream 1 after filtering, canceling cannot be carried out accurately, and, consequently, other streams 2 and 3 cannot be demultiplexed accurately from the received signal after canceling.

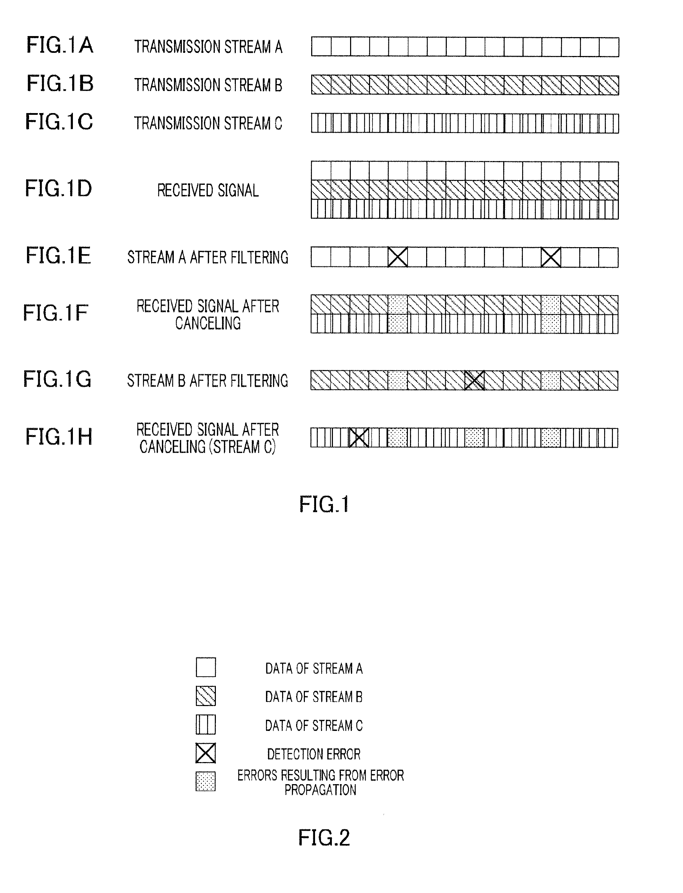

FIG.1 illustrates the above error propagation in detail. FIG.1(A) to (H) show the streams obtained in each step. Further, FIG.2 shows which streams the notation methods in FIG.1 such as hatching designate. These notation methods are used throughout the present description. Further, a case will be described as an example where the number of transmission streams is three.

FIG.1(A), FIG.1(B) and FIG.1(C) show transmission stream A, transmission stream B and transmission stream C, respectively. Received quality varies between streams in the radio receiving apparatus. Assume that the quality of stream A is the best, the quality of stream B is the second best and the quality of stream C is the poorest. The radio transmitting apparatus knows the quality of each stream in the radio receiving apparatus through the feedback channel, for example, and selects the coding rates and modulation schemes that can achieve the required error rate according to this qual ity. Then, transmission streams A to C are transmitted, and these streams are received mixed in the radio receiving apparatus. This received signal is shown in FIG.1(D). Further, although the received signal of FIG.1 (D) alone is shown for ease of description, actually, there are received signals equaling the number of receiving antennas.

With the SIC receiving scheme, streams are ranked in descending order of received quality and are extracted from the highest stream in the raking order, that is, from the stream of the best received quality. That is, as to details of reception processing, first, the highest stream A is extracted from a signal of FIG.1 (D) by filtering. In this case, if an error occurs upon detection of stream A after filtering, stream A is as shown in FIG.1(E). Next, the received signal of FIG.1(F) is obtained by canceling stream A of this FIG.1 (E) from the received signal of FIG.1(D). FIG.1 (F) shows errors resulting from error propagation from stream A. Next, stream B of the next order is extracted from the received signal of FIG.1(F) by filtering. Then, if an error occurs upon detection of stream B after filtering, this stream B is as shown in FIG.1 (G). Next, stream C is what remains after stream B is cancelled from the received signal of FIG.1(F) using the stream of FIG.1 (G). If an error occurs upon detection of this stream C, stream C is as shown in FIG.1 (H). In this way, if an error occurs in previously detected streams, error propagates to subsequent streams. Error propagation that occurs this way decreases communication system throughput.

For example, if error correction coding is carried out in the radio transmitting apparatus, some of the errors that occur upon detection can be corrected by decoding. However, errors that result from error propagation occur due to the received quality of a higher stream, irrespective of the received quality of this stream, and so errors resulting from error propagation cannot be corrected by error correction coding.

As a means that can be easily derived to solve error propagation, there is a method of preventing errors in streams. Conventionally, when adaptive modulation is carried out on a per stream basis, a transmission signal is generated using a signal with error robustness that can achieve the required error rate, according to CSI that is fed back. By contrast with this, by carrying out transmission using signals of greater error robustness than the error robustness for the required error rate, it is possible to prevent errors in each stream. Improving error robustness equals, for example, increasing transmission power, decreasing the coding rate and decreasing the M-ary modulation value.

However, this solution has the following problem. For example, if throughput needs to be kept constant, transmission power needs to be increased to improve error robustness. By contrast with this, if transmission power needs to be kept constant, the coding rate and the M-ary modulation value need to be decreased to improve error robustness. Increasing transmission power increases load upon the radio transmitting apparatus, and, in that case, increases interference against other communication apparatuses communicating in adjacent areas, and, consequently, it is preferable to keep transmission power constant. Then, constant transmission power is a prerequisite, and the coding rate and the M-ary modulation value need to be decreased to improve error robustness of each stream, and, as a result, communication system throughput decreases.

It is therefore an object of the present invention to provide a radio transmitting apparatus and radio transmitting method that improve error robustness of transmission streams and prevent a decrease in communication system throughput.

### Means for Solving the Problem

The radio transmitting apparatus according to the present invention employs a configuration including: a ranking section that ranks a plurality of transmission streams based on received quality in a radio receiving apparatus; and a setting section that sets error robustness of a transmission stream ranked higher quality greater than error robustness of a transmissions stream ranked lower quality.

### Advantageous Effect of the Invention

The present invention is able to improve error robustness of transmission streams and prevent a decrease in communication system throughput.

### Brief Description of Drawings

FIG.1 illustrates error propagation in detail;
FIG.2 shows which streams notation methods such as hatching designate;
FIG. 3 is a block diagram showing a main configuration of a radio transmitting apparatus according to Embodiment 1 of the present invention;
FIG. 4 is a block diagram showing a main configuration in a repetition controlling section according to Embodiment 1;
FIG.5 illustrates the effect of increasing repetition factors in detail;
FIG.6 shows the configurations of transmission streams;
FIG.7 is a flowchart of a radio transmitting method according to Embodiment 1;
FIG. 8 is a block diagram showing a main configuration of a radio receiving apparatus according to Embodiments 1;
FIG.9 is a block diagram showing a main configuration in a symbol combination controlling section according to Embodiment 1;
FIG.10 is a block diagram showing a main configuration of the radio transmitting apparatus according to Embodiment 2 of the present invention;
FIG.11 is a block diagram showing a main configuration of a transmission signal controlling section according to Embodiment 2;
FIG.12 shows the configurations of transmission streams;
FIG.13 is a flowchart showing a radio transmitting method according to Embodiment 2;
FIG.14 is a block diagram showing a main configuration of the radio receiving apparatus according to Embodiment 2;
FIG.15 is a block diagram showing a main configuration in the symbol combination controlling section according to Embodiment 2;
FIG.16 is a block diagram showing a main configuration of the radio transmitting apparatus according to Embodiment 3 of the present invention;
Fig.17 is a block diagram showing a main configuration in the transmission signal controlling section according to Embodiment 3;
FIG.18 shows an example of repetition according to Embodiment 3;
FIG.19 shows an example of mapping of systematic bits according to Embodiment 3;
FIG.20 is a flowchart showing the radio transmitting method according to Embodiment 3;
FIG.21 is a block diagram showing a main configuration in the symbol combination controlling section according to Embodiment 3;
FIG.22 is a block diagram showing a main configuration of the transmission signal controlling section according to Embodiment 4 of the present invention;
FIG.23 shows examples of mapping patterns according to Embodiment 4;
FIG.24 shows examples of mapping patterns according to Embodiment 4;
FIG.25 shows examples of mapping patterns according to Embodiment 4;
FIG.26 is a flowchart showing the radio transmitting method according to Embodiment 4;
Fig.27 is a block diagram showing a main configuration in the symbol combination controlling section according to Embodiment 4;
FIG.28 is a block diagram showing a main configuration of the radio transmitting apparatus according to Embodiment 5 of the present invention;
FIG.29 is a block diagram showing a main configuration in the transmission signal controlling section according to Embodiment 5;
FIG. 30 shows the configurations of streams according to Embodiment 5;
FIG.31 is a flowchart illustrating the radio transmitting method according to Embodiment 5;
FIG.32 is a block diagram showing a main configuration of the radio receiving apparatus according to Embodiment 5; and
FIG.33 is a block diagram showing a main configuration in the demodulation controlling section according to Embodiment 5.

### Best Mode for Carrying Out the Invention

Embodiments of the present invention will be described in detail with reference to the accompanying drawings. Further, the same reference numerals will be assigned to a plurality of configurations having the same functions and different branch numbers will be assigned subsequent to each reference numeral to differentiate from one another.

### (Embodiment 1)

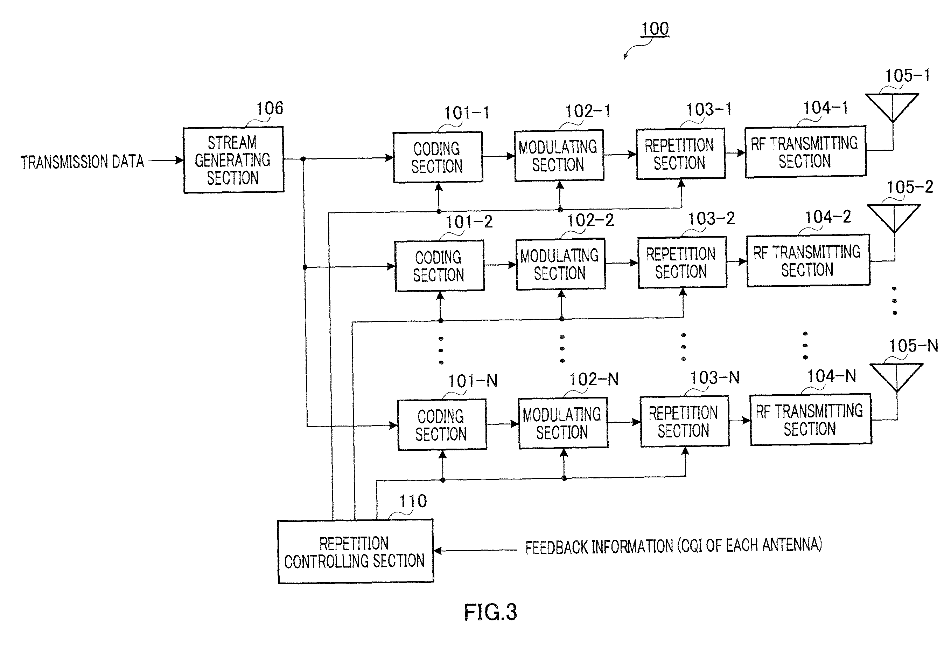

FIG. 3 is a block diagram showing a main configuration of radio transmitting apparatus 100 according to Embodiment 1 of the present invention.

Radio transmitting apparatus 100 has stream generating section 106, coding sections 101-1 to 101-N, modulating sections 102-1 to 102-N, repetition sections 103-1 to 103-N, RF transmitting sections 104-1 to 104-N, antennas 105-1 to 105-N, and repetition controlling section 110, and is configured with N transmission sequences that process N streams. These sections carry out the following operation.

stream generating section 106 generates N streams of data (or later simply "streams") from transmission data inputted, and outputs the N streams data to coding sections 101-1 to 101-N.

Coding sections 101-1 to 101-N perform error correction coding such as turbo coding on the streams outputted from stream generating section 106 and output the encoded streams to modulating sections 102-1 to 102-N.

Modulating sections 102-1 to 102-N carry out modulation processing on the streams outputted from coding sections 101-1 to 101-N according to predetermined modulation schemes such as QPSK and 16QAM, and outputs the modulated streams to repetition sections 103-1 to 103-N.

Repetition controlling section 110 determines the repetition rate of each stream, based on feedback information acquired from the radio receiving apparatus through the feedback channel, according to the method described later, and outputs the results to repetition sections 103-1 to 103-N.

Repetition sections 103-1 to 103-N repeat the streams outputted from modulating sections 102-1 to 102-N based on the repetition rate of each stream determined in repetition controlling section 110, and outputs the results to RF transmitting sections 104-1 to 104-N.

RF transmitting sections 104-1 to 104-N carry out predetermined radio (RF) transmission processing such as D/A conversion and up-conversion on the streams outputted from repetition sections 103-1 to 103-N, and transmits the resulting radio signals through antennas 105-1 to 105-N.

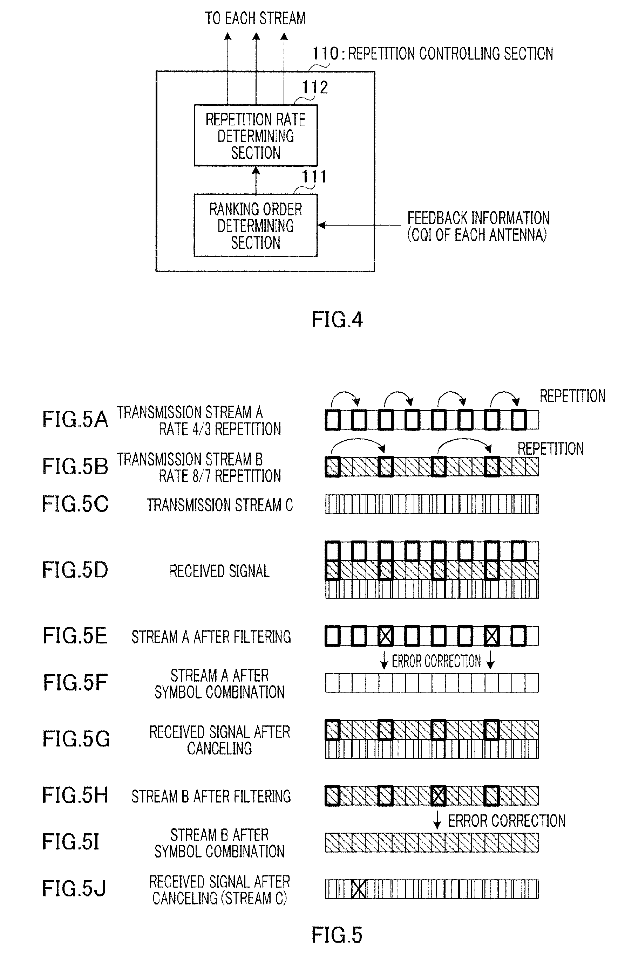

FIG.4 is a block diagram showing a main configuration in above repetition controlling section 110.

Repetition controlling section 110 has ranking order determining section 111 and repetition rate determining section 112.

Ranking order determining section 111 determines the ranking order of each stream based on CQI's included in feedback information.

Repetition rate determining section 112 determines the repetition rate of each stream according to the ranking orders determined in ranking order determining section 111 and outputs the results. In this case, streams of higher rankings are assigned higher repetition rates.

In this way, in radio transmitting apparatus 100, repetition rate determining section 112 improves the error robustness of transmission streams by assigning higher repetition rates to streams of higher rankings. Further, the repetition rates of the individual streams are determined according to the ranking orders. Consequently, it is possible to reduce errors resulting from error propagation. Further, it is possible to prevent a decrease in throughput resulting from improving the error robustness of lower streams.

The influence of error propagation caused in a lower stream by an error in a higher stream, will be discussed in more detail.

In error propagation in SIC reception, an error occurring in a stream of a higher ranking order has a greater influences upon the reception characteristics of the entire streams. That is, an error in a higher stream is a cause of errors in all the lower streams below that stream. On the other hand, compared to a higher stream, an error in a lower stream has little influence upon all of the streams, because there are few lower streams below that lower stream. Then, reducing errors in higher streams will produce a greater effect of improving the reception characteristics of the entire streams. The present invention focuses upon this point.

To reduce errors in higher streams, with the present invention, a transmission signal of a higher stream is generated with greater error robustness than the error robustness for the required quality. Furthermore, a lower stream is set to the error robustness for the required quality or set slightly more robust than that. In this regard, in the adaptive modulation disclosed in Patent Document 1, for example, transmission signals with error robustness satisfying the required error rate are generated according to the actual received quality of each stream in the radio receiving apparatus.

With the present embodiment, in particular, as a means of improving error robustness, the repetition factor (i.e. repetition rate) of data symbols is increased. Repetition refers to a technique of mapping a transmission symbol and symbols obtained by copying that transmission symbol in separate positions and transmitting these symbols. The radio receiving apparatus is able to achieve diversity gain by combining symbols of the same content transmitted separately or improve the SNR by in-phase combination. That is to say, by increasing the repetition factor, symbols produce fewer errors and improve the error robustness.

On the other hand, decreasing the coding rate is also a possible means of improving error robustness. However, to obtain an effect by improving error robustness by this means, decoding processing needs to be carried out before cancellation processing in the radio receiving apparatus, and, consequently, the processing delay in the radio receiving apparatus increases. This processing delay occurs from calculating the bit likelihood, which is required in decoding processing, performing decoding processing and encoding the decoded signal again. Then, if the processing delay increases, the speed of arithmetic operation processing in the radio receiving apparatus needs to be faster to carry out reception processing at the same timing as in the case of single stream transmission, which is difficult to realize.

In this way, if the method of increasing the repetition factor is used as a means for improving error robustness, only symbol combination needs to be carried out in the radio receiving apparatus and processing such as bit likelihood calculation and decoding processing are not necessary, and, consequently, little processing delay is produced. Therefore, without producing much processing delay in the radio receiving apparatus, it is possible to improve the error robustness of transmission signals.

Further, with the SDM receiving scheme, which uses iterative processing including the SIC scheme, processing delay is likely to increase, and, consequently the above method of increasing the repetition factor works well with the SDM scheme.

The advantage of increasing the repetition factor will be described in detail using FIG.5. In stream A and stream B, the data shown with bold lines represent repetition symbols. Further, assume that there are three transmission streams ranked A, B and C in order according to quality in the radio receiving apparatus.

The radio transmitting apparatus transmits the highest stream A by applying repetition at a rate of 4/3 (FIG.5(A)) and transmits the next stream B by applying repetition at a rate of 8/7 (FIG.5(B)). Stream C is transmitted without applying repetition (FIG.5(C)). Further, the radio transmitting apparatus carries out adaptive modulation on a per stream basis and selects coding rates and modulation schemes matching the received quality of individual streams in the radio receiving apparatus.

FIG.5(D) shows received signals in the radio receiving apparatus. The highest stream A is extracted from this signal by filtering. If an error is detected upon detection of stream A after filtering, stream A is as shown in FIG.5(E). FIG.5(E) shows the result of carrying out symbol combination of the repetition symbols in FIG.5(E). In FIG.5(F), the errors that occurred in FIG.5(F) are corrected. Next, FIG.5(G) shows the received signal of FIG.5(D), from which stream A is cancelled using the stream of FIG. 5(F). No error occurs in stream A used for the cancellation, and so there is no error propagation to FIG.5(G). Next, stream B of the next order is extracted from the received signal of FIG.5(G) by filtering. If an error is detected upon detection of stream B after filtering, stream B is as shown in FIG.5(H). FIG.5(I) shows the result of carrying out symbol combination of the repetition symbols in FIG.5(H). FIG.5(I) shows that the errors that occurred in FIG.5(H) are corrected. Next, stream C is what remains after stream B is cancelled from the received signal of FIG.5(G) using the stream of FIG.5(I), and, if an error is detected in the decision of this stream C, the received signal shown in FIG.5(J) is obtained.

In this way, errors resulting from error propagation are prevented by improving the error robustness of higher streams using repetition of higher rates, and, given that the repetition factors in lower streams are relatively low, throughput decreases little. Therefore, a significant decrease in the throughput of the entire streams is prevented.

Next, the method of determining the repetition rate of each stream, will be described in detail. With the present embodiment, repetition rate determining section 112 determines the repetition rates of individual streams using the raking orders of the streams.

The ranking orders of streams are determined in ranking order determining section 111 based on the received quality of each stream in the radio receiving apparatus. If the ranking is carried out in descending order of received quality, the stream of the highest received quality is the highest stream and the stream of the lowest received quality is the lowest stream. By feeding back the received quality of each stream from the radio receiving apparatus to the radio transmitting apparatus, it is possible to determine the ranking orders in the radio transmitting apparatus.

With the present embodiment, by setting in advance the correspondences between ranking orders and repetition rates in a data table, repetition rates are determined based on ranking orders. In these correspondences, the repetition rates for streams of higher ranking orders are set high to improve the error robustness of the streams, and, for streams of lower ranking orders, the repetition rates are set low given that the streams do not require high error robustness. By this means, it is possible to reflect the received quality of each stream, in a reliable manner, when the repetition rates of individual streams are determined.

For example, a repetition rate greater than one is set for the highest stream. As a measure of that repetition rate, it is preferable to employ a repetition rate at which received quality such as the SNR and SINR improves by about 1 dB to 2 dB by carrying out symbol combination in the radio receiving apparatus. Further, it is also possible to employ a repetition rate that allows several dB of improvement.

On the other hand, the repetition rate for the lower streams is set "1." The repetition rate "1" is the same as not carrying out repetition at all. In this case, the lower streams refer to a plurality of streams including the lowest stream. This is because an error that occurs in a lower stream has little influence upon all of the streams and it is not necessary to set differing repetition rates. Further, the lower streams may be limited to the lowest stream.

If there are other streams between the highest stream and the lower streams of the repetition rate=1, the repetition rates of these other streams are set between the repetition rate of the highest stream and the repetition rate=1 of the lower streams. In this case, the repetition rates of the streams are preferably set at regular intervals between the repetition rate of the highest stream and the repetition rate=1 of the lower streams. This is because reception quality can be improved by symbol combination at regular intervals.

A case of transmitting four streams will be described in more detail as an example. Following table 1 shows an example of the correspondences between ranking orders and repetition rates.

**[Table 1]**

| stream number | Received quality | Ranking order | Repetition rate |
|---|---|---|---|
| 1 | 10dB | 1 | 4/3 |
| 2 | 8dB | 2 | 8/7 |
| 3 | 5dB | 3 | 1 |
| 4 | 0dB | 4 | 1 |

In table 1, "stream number" is the identification number of each stream and "received quality" is the received quality of each stream. Received quality includes the SNR, the SINR, and etc. "Ranking order" is the order of each stream, ranked in descending order of received quality. Furthermore, the ranking orders and repetition rates are provided in advance in the relationships shown in following table 2. Based on these relationships, the repetition rates in table 1 are determined. For example, stream number 1 in table 1 will be described. In the situation where the received quality of each stream is as shown in table 1, the received quality of stream number 1 is 10 dB and is determined to be the first in the ranking orders in comparison to the quality of the other streams. Here, using the relationships in table 2, the repetition rate is determined 4/3.

**[Table 2]**

| Ranking order | Repetition rate |
|---|---|
| 1 | 4/3 |
| 2 | 8/7 |
| 3 | 1 |
| 4 | 1 |

According to the relationships in table 2, the repetition rate of the first rank is set to be the highest and the repetition rates of the third and fourth ranks are set "1." The repetition rate of the second rank is set between the repetition rate of the first rank and the repetition rate of the third rank in the ranking. Further, the third and fourth ranks are assigned the same repetition rate. This is because an error that occurs in a lower stream has little influence upon all of the streams and it is not necessary to set differing repetition rates. Further, between the third rank and fourth rank, the third rank may be assigned the higher repetition rate.

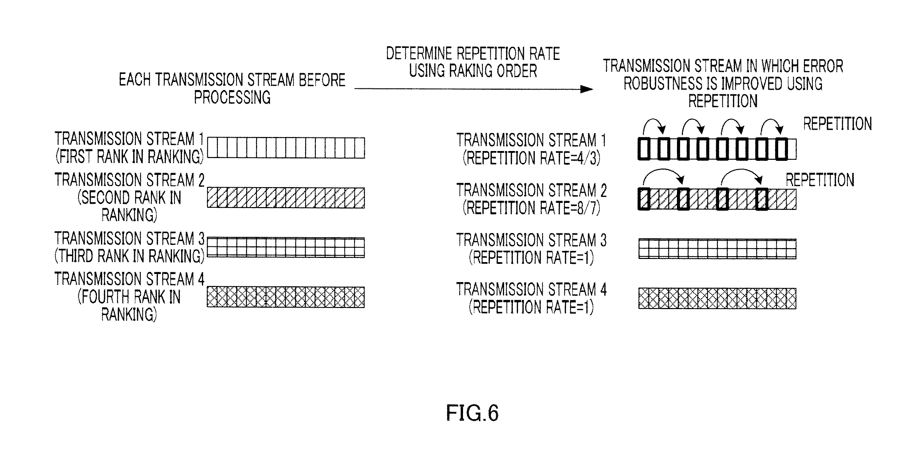

Further, FIG.6 shows the configuration of each transmission stream where the repetition rates are determined using ranking orders in this way. As shown in this figure, for streams before repetition processing, the repetition rates are determined using ranking information and repetition is carried out, so that repetition of higher rates in higher streams is realized.

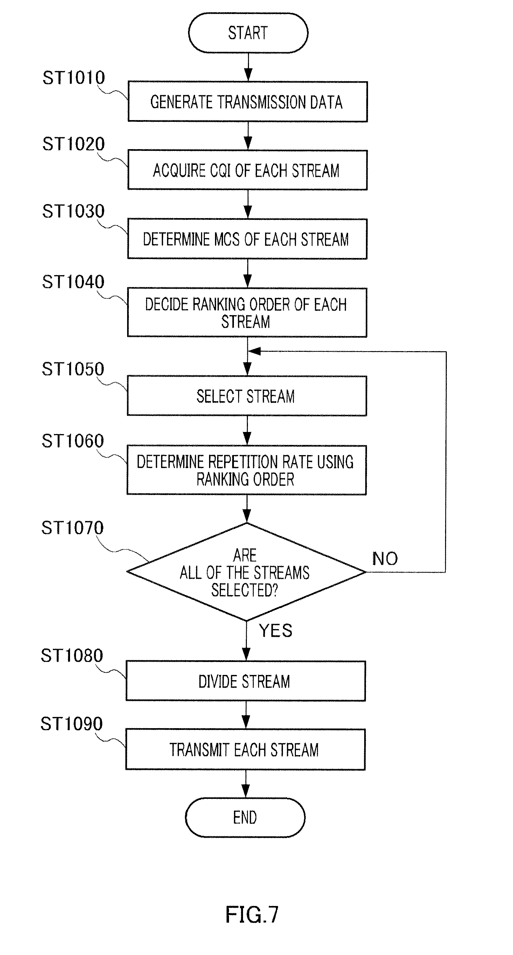

Next, the radio transmitting method according to the present embodiment will be described using the flowchart shown in FIG.7.

First, transmission data is generated and the received quality of each stream is acquired (ST1010 and ST1020). Feedback information from the radio receiving apparatus is one possible source of information.

Next, according to the received quality of each stream acquired in ST1020, MCS parameters (that is, the modulation scheme and coding rate) that achieve the required error rate, are determined for each stream (ST1030). Further, according to the received quality of each stream acquired in ST1020, ranking is carried out in descending order of received quality, and the ranking orders of streams are decided (ST1040).

The processings in ST1050 to ST1070 are carried out on a per stream basis. That is, according to, for example, the order of ranking and the order of antenna numbers, first, one stream is selected (ST1050), and then the repetition rate of each stream is determined according to the ranking orders of the streams determined in ST1040 (ST1060). In ST1070, whether or not all of the streams have been selected is decided.

If all of the streams have been selected, the flow proceeds to ST1080, and the transmission data generated in ST1010 is divided into a plurality of streams (ST1080). Then, using the MCS parameters determined in ST1030 and the repetition rates determined in ST1060, the streams are transmitted (ST1090).

Next, the method of transmitting control information between the radio transmitting apparatus and the radio receiving apparatus will be described.

With the present embodiment, the correspondences between ranking orders and repetition rates are determined in advance and a data table that stores these correspondences is shared between the transmitting end and the receiving end, so that, if the ranking orders can be learned on both the transmitting end and the receiving end, the repetition rate of each stream can be determined. These ranking orders are determined based on feedback information from the radio receiving apparatus and need not be transmitted as control information upon transmitting streams. However, there is a possibility that feedback information that is received by error produces differences between the decision result in the radio transmitting apparatus and the decision result in the radio receiving apparatus, and so a configuration may be possible for the countermeasure where ranking orders are transmitted as control information upon transmitting streams.

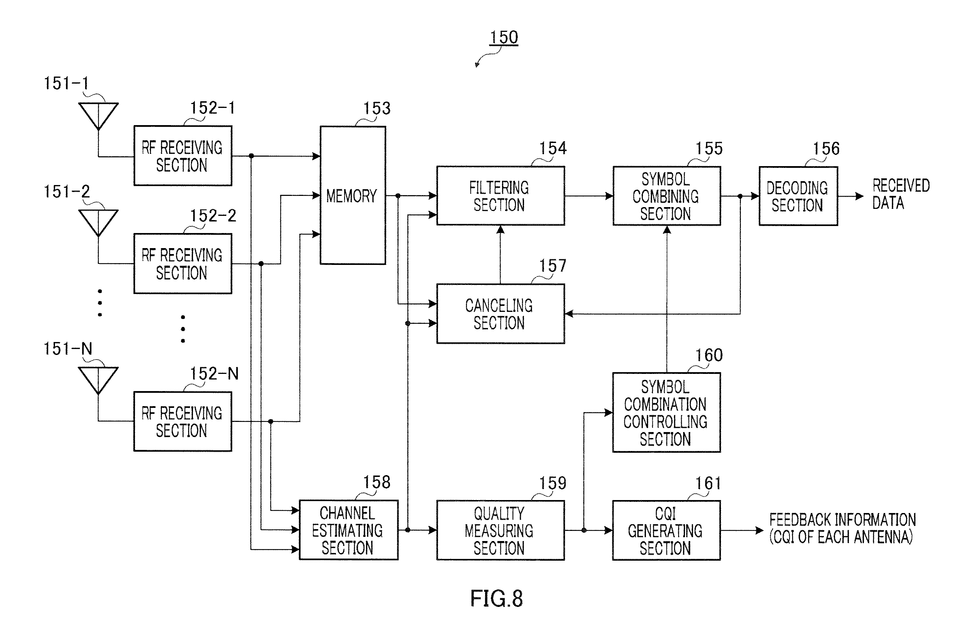

Next, radio receiving apparatus 150 according to the present embodiment supporting above radio transmitting apparatus 1000 will be described. FIG.8 is a block diagram showing a main configuration of radio receiving apparatus 150.

RF receiving sections 152-1 to 152-N carry out predetermined radio reception processing such as down-conversion and A/D conversion on signals received through antennas 151-1 to 151-N.

Channel estimating section 158 performs channel estimation on the received signals using the pilots included in the signals outputted from RF receiving sections 152-1 to 152-N, and outputs the resulting channel estimation values.

Quality measuring section 159 measures received quality using the channel estimation values outputted from channel estimating section 158 and outputs the measurement results to symbol combination controlling section 160 and CQI generating section 161.

CQI generating section 161 generates CQI based on the measurement results in quality measuring section 159 and outputs this as feedback information.

Symbol combining section 160 determines the repetition rate of each stream based on the measurement result in quality measuring section 159 and outputs the repetition rate to symbol combining section 155.

Memory 153 stores the signals outputted from RF receiving sections 152-1 to 152-N and outputs the signals to filtering section 154 and canceling section 157.

Filtering section 154 extracts the individual streams from the received signals by filtering and outputs the streams to symbol combining section 155. To extract the highest stream, the highest stream is extracted from the signals stored in memory 153. Further, to extract other streams, streams are extracted from the signals outputted from canceling section 157. The filtering methods include ZF and MMSE, and filtering is carried out by calculating the weights using the channel estimation values outputted from channel estimating section 158.

Canceling section 157 cancels the streams extracted by filtering from the received signal and outputs the streams to filtering section 154, and, at the same time, stores the streams for cancellation of the next stream. To cancel the highest stream, the signal outputted from symbol combining section 155 is canceled from the signals stored in memory 153. To cancel other streams, the signal outputted from symbol combining section 155 is canceled from the signals stored after cancellation. In this case, cancellation is carried out by reproducing the channel variation of the stream to be canceled, using the channel estimation value outputted from channel estimation section 158.

According to the repetition rate of each stream outputted from symbol combining section 160, symbol combining section 155 carries out symbol combination of repetition symbols in received data outputted from filtering section 154. This symbol combination is the same as the symbol combination based on repetition rates in radio transmitting apparatus 100.

Decoding section 156 performs error correction decoding on signals after symbol combination and decodes received data.

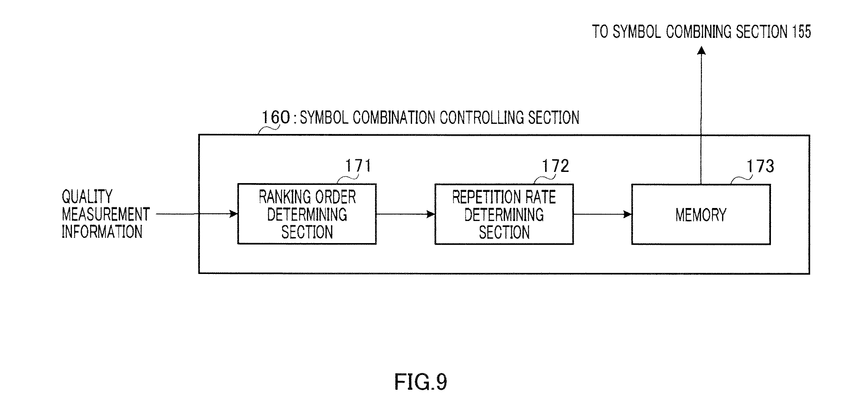

Fig.9 is a block diagram showing a main configuration in above symbol combination controlling section 160.

Symbol combination controlling section 160 has ranking order determining section 171, repetition rate determining section 172 and memory 173.

Ranking order determining section 171 determines the ranking orders of the streams based on quality measurement information inputted. Repetition rate determining section 172 determines the repetition rate of each stream based on the ranking orders determined in ranking order determining section 171. In this case, the method of determining the ranking orders and the method of determining the repetition rates are the same between the transmitting end and the receiving end. Further, given that CQI feedback causes delay, the repetition rates that are determined are held in memory 173 until transmitted from radio transmitting apparatus 150.

In this way, radio receiving apparatus 150 is able to receive signals transmitted from radio transmitting apparatus 100 and decode data.

As described above, according to the present embodiment, transmission signals of higher streams are generated with greater error robustness than the error robustness matching the required quality. By this means, it is possible to reduce error propagation to lower streams and prevent a decrease in communication system throughput. Further, the decrease in throughput due to improvement of error robustness is less in lower streams, so that it is possible to maintain the throughput of the entire streams.

Further, according to the above configuration, the error robustness of higher streams is improved by increasing the repetition rate. By this means, it is possible to reduce the processing delay in the radio receiving apparatus.

Further, according to the present embodiment, the repetition rates of each stream is determined according to the ranking order of that stream. By this means, upon determining the repetition rates of streams individually, it is possible to reflect the received quality of each stream in a reliable manner.

Further, although, with the present embodiment, a configuration has been described where, by feeding back received quality in the radio receiving apparatus to the radio transmitting apparatus, ranking orders are determined in the radio transmitting apparatus, a configuration is also possible where ranking results determined in the radio receiving apparatus are fed back to the radio transmitting apparatus. Further, a configuration is also possible where coding rates are changed according to the repetition rate determined for each stream. By this means, it is possible to prevent a decrease in throughput of each stream. For example, if the repetition rate of a given stream is determined 4/3, by multiplying the coding rate of this stream by 3/4, which is the reciprocal of the repetition rate, it is possible to carry out repetition without decreasing throughput.

### (Embodiment 2)

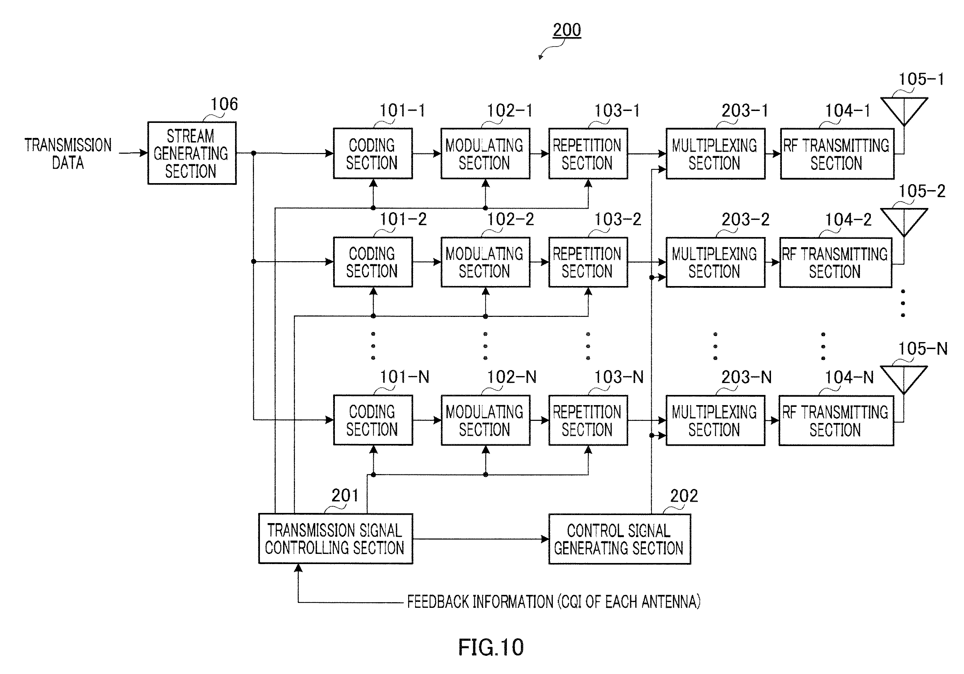

FIG.10 is a block diagram showing a main configuration of radio transmitting apparatus 200 according to Embodiment 2 of the present invention. This radio transmitting apparatus 200 has the same basic configuration as radio transmitting apparatus 100 (see FIG.3) described in Embodiment 1, and the same components will be assigned the same reference numerals and redundant descriptions will be omitted.

The present embodiment differs from Embodiment 1 in adding transmission signal controlling section 201, control signal generating section 202 and multiplexing sections 203-1 to 203-N instead of repetition controlling section 110, and in determining the repetition rates of individual streams based on the MCS parameters of each stream (hereinafter simply "MCS"), in addition to the raking order of each stream.

Transmission signal controlling section 201 determines the repetition rates of streams. Control signal generating section 202 generates a control signal to be transmitted to the radio receiving apparatus, from the control information of a transmission signal outputted from transmission signal controlling section 201. Multiplexing sections 203-1 to 203-N multiplex data outputted from repetition sections 103-1 to 103-N and the control signal outputted from control signal generating section 202.

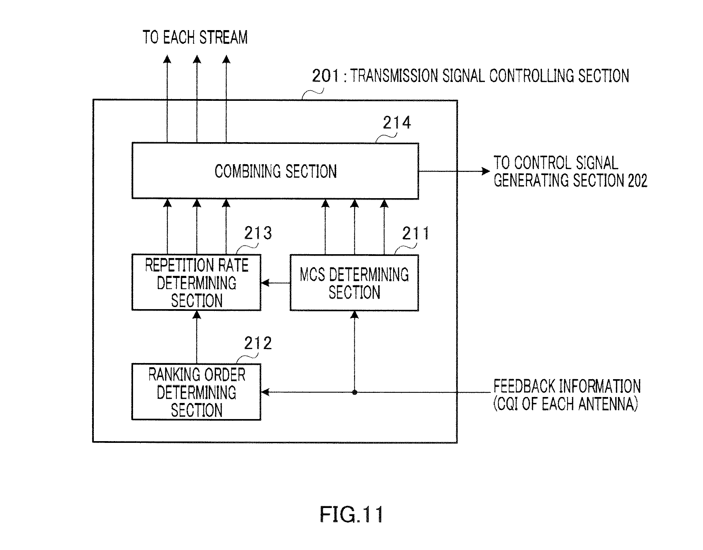

FIG.11 is a block diagram showing a main configuration in transmission signal controlling section 201.

Transmission signal controlling section 201 has ranking order determining section 212, MCS determining section 211, repetition rate determining section 213 and combining section 214.

MCS determining section 211 determines the MCS's based on the CQI's of individual streams in feedback information inputted. Ranking order determining section 212 determines the ranking orders based on the CQI's of individual streams inputted likewise. Repetition rate determining section 213 determines the repetition rate of each stream based on the MCS's determined in MCS determining section 211 and the ranking orders determined in ranking order determining section 212. Combining section 214 combines the MCS information for each stream determined in MCS determining section 211 and the repetition rate information for each stream determined in repetition rate determining section 213, and outputs the result as one signal.

Differences include the method of determining the repetition rates, as described above. To be more specific, although with Embodiment 1 the repetition rates are determined using only the ranking order of each stream, with the present embodiment, the repetition rates are determined using the MCS of each stream in addition to the ranking order.

The method of determining the repetition rates of individual streams will be described.

The ranking order is determined in the same way as in Embodiment 1. Further, the MCS of each stream is determined based on the CQI of each stream fed back from the radio transmitting apparatus.

Then, by setting the correspondences between the ranking orders, MCS and repetition rates, it is possible to determine the repetition rate of each stream. In these correspondences, for each MCS, the repetition rates for streams of higher ranking orders are set high to improve the error robustness of the streams, and, for streams of lower raking orders, the repetition rates are set low given that the streams do not require high error robustness. Then, depending on the MCS's, the levels in which the repetition rates are set, are changed.

For each MCS, a plurality of repetition rate levels, and the setting method is the same as in Embodiment 1. That is, for each MCS, the method of setting the repetition rate of the highest stream, the method of setting the repetition rate of the lowest stream and the method of setting the repetition rates of intermediate streams are the same as described in Embodiment 1.

With the present embodiment, a plurality of repetition rates matching respective MCS's are set and the number of levels of repetition rates changes. By this means, based on the reception characteristics of the selected MCS, it is possible to select a more optimal repetition rate. That is, for an MCS of reception characteristics that are decided good, the error robustness needs not be improved much, so that the number of levels of repetition rates is set small. On the other hand, for an MCS of reception characteristics that are decided poor, the number of levels of repetition rates is set large so that the error robustness by repetition can be determined based on the ranking order. By this means, upon determining the repetition rate of each stream, it is possible to determine a repetition rate that is appropriate for both the reception characteristics and ranking order of the MCS of that stream.

For example, a case where the correspondences between the orders of streams, MCS's and repetition rates are represented by table 3, will be described.

**[Table 3]**

| MCS | Ranking order | Repetition rate |
|---|---|---|
| 16QAM, R=5/6 | 2-4 | 1 |
| 16QAM, R=5/6 | 1 | 8/7 |
| 16QAM, R=2/3 | 2-4 | 1 |
| 16QAM, R=2/3 | 1 | 8/7 |
| 16QAM, R=1/2 | 3-4 | 1 |
| 16QAM, R=1/2 | 2 | 8/7 |
| 16QAM, R=1/2 | 1 | 4/3 |
| : | : | : |
| : | : | : |

Referring to table 3, if the MCS is "16QAM, R=5/6," two levels of repetition rates are set depending on the ranking orders. By contrast with this, if the MCS is "16QAM, R=1/2," three levels of repetition rates are set depending on the ranking orders.

If decoding processing is not carried out prior to cancellation processing in the SIC receiving scheme, the reception characteristics of modulation schemes are important. For the same modulation scheme, if the received quality is good, a higher coding rate is set. Given a case where the MCS is "16QAM, R=5/6" and a case where the MCS is "16QAM, R=1/2," the modulation scheme is the same, but the former should be selected if the received quality is good. For the same modulation scheme, if the received quality is good, few errors occur in higher streams, so that the error robustness needs not be improved much and the number of levels of repetition rates is set small. By contrast with this, if the modulation scheme is the same and the received quality is poor, the error robustness needs to be improved by repetition and the number of levels of repetition rates is set greater to determine the level of rate according to the ranking order.

A case where four streams are transmitted will be described using following table 4.

**[Table 4]**

| Stream Number | Received Quality | MCS | Ranking order | Repetition Rate |
|---|---|---|---|---|
| 1 | 10dB | 16QAM, | 1 | 8/7 |
| | | R=5/6 | | |
| 2 | 8dB | 16QAM, | 2 | 8/7 |
| | | R=1/2 | | |
| 3 | 5dB | QPSK, | 3 | 1 |
| | | R=1/3 | | |
| 4 | 0dB | BPSK, | 4 | 1 |
| | | R=1/2 | | |

In table 4, the stream numbers, received qualities and ranking orders are the same as table 1 of Embodiment 1. Using these MCS's and ranking or ders for individual streams, the repetition rate of each stream can be determined from the relationships in table 3.

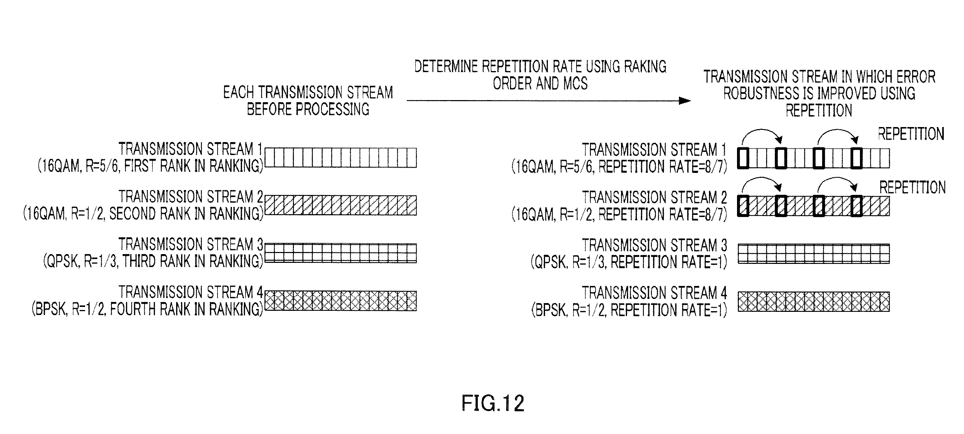

Further, FIG.12 shows the configuration of each transmission stream when the repetition rate is determined using the ranking order in this way. As shown in this figure, by repeating the streams be fore repetition processing using repetition rates based on the ranking orders and MCS's, repetition rate matching the state of each stream can be realized.

Next, a control information transmitting method between the radio transmitting apparatus and the radio receiving apparatus will be described.

The MCS of a transmission signal is information required in demodulation and decoding processing in the radio receiving apparatus and needs to be fed back from the radio transmitting apparatus to the radio receiving apparatus as control information. Generally, by sharing the same MCS table between the transmitting end and the receiving end and transmitting control information showing applicable MCS's, it is possible to share MCS's between the transmitting end and the receiving end.

With the present embodiment, by further including repetition rates in this MCS table, it is possible to share the repetition rates as well as MCS information between the transmitting end and the receiving end. For example, following table 5 shows an example of an MCS table including repetition rates.

**[Table 5]**

| MCS Level | modulation Scheme | Coding Rate | Repetition |
|---|---|---|---|
| 15 | 16QAM | R=5/6 | 1 |
| 14 | | | 8/7 |
| 13 | 16QAM | R=2/3 | 1 |
| 12 | | | 8/7 |
| 11 | 16QAM | R=1/2 | 4/3 |
| 10 | | | 1 |
| 9 | | | 8/7 |
| 8 | QPSK | R=5/6 | 1 |
| 7 | | | 8/7 |
| : | : | : | : |
| : | : | : | : |

In table 5, MCS levels are used as information showing both the MCS and the repetition rate. That is, each MCS level is assigned an MCS and a repetition rate, so that, by transmitting this MCS level as control information, the MCS's and repetition rates can be shared between the transmitting end and the receiving end.

Further, by using a repetition rate specific data table in addition to the MCS table and transmitting this table information as control information, it is possible to share the repetition rates between the transmitting end and the receiving end. However, with the present embodiment, repetition rates are not set at equal intervals between MCS's, which provides an advantage of making it unnecessary to assign information of repetition rates that are not necessary and are not set by using the table shown in table 5.

Further, if repetition rates are shared between the transmitting end and the receiving end using control information in this way, there is an advantage of simplifying the control for symbol combination because it is not necessary to determine repetition rates from the MCS's and ranking orders in the radio receiving apparatus.

Further, similar to Embodiment 1, it is possible to determine ranking orders in the radio receiving apparatus and determine the repetition rates using the determined ranking orders and MCS information. In this case, the criterion for determining the repetition rate in the radio transmitting apparatus and the criterion for determining the repetition rate in the radio receiving apparatus need to be the same.

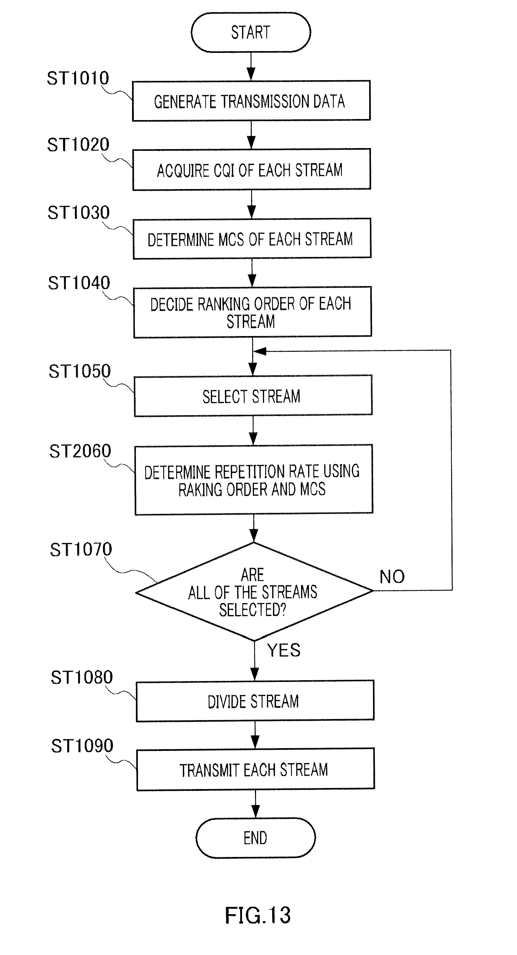

FIG.13 is a flowchart showing the steps of the radio transmitting method according to the present embodiment.

In ST2060, the repetition rate of each stream is determined using the MCS's of the individual streams determined in ST1030 and the ranking orders of individual streams decided in ST1040 from the correspondences between the MCS's, ranking orders and repetition rates. Other steps are the same as in the flowchart (see FIG.7) described in Embodiment 1, and so will be assigned the same reference numerals and redundant descriptions will be omitted.

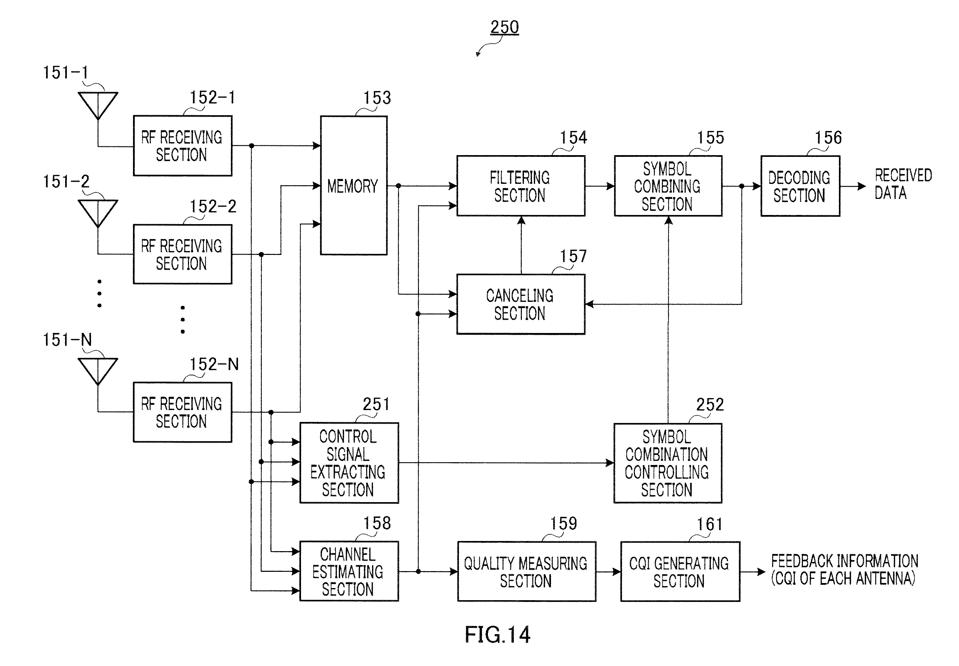

Next, radio receiving apparatus 250 according to the present embodiment supporting above radio transmitting apparatus 200 will be described. FIG.14 is a block diagram showing a main configuration of radio receiving apparatus 250.

The present embodiment differs from Embodiment 1 in adding control signal extracting section 251 and inputting only the output from this control signal extracting section 251 to symbol combination controlling section 252.

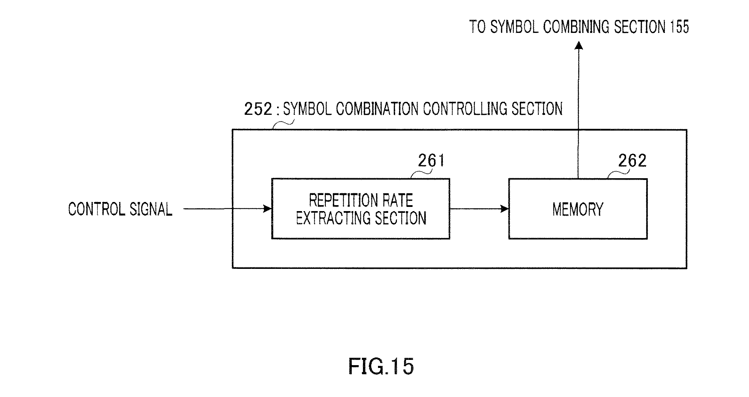

FIG.15 is a block diagram showing a main configuration in above symbol combination controlling section 252.

Symbol combination controlling section 252 has repetition rate extracting section 261 and memory 262. Repetition rate extracting section 261 extracts the repetition rates of the individual streams from control signals inputted. Memory 262 stores the repetition rates until the transmission timing of the radio transmitting apparatus.

As described above, according to the present embodiment, the repetition rate of each stream is determined using the MCS and ranking order of that stream. By this means, upon determining the repetition rate of each stream, it is possible to determine a repetition rate matching the reception characteristics and ranking order of the MCS of that stream.

### (Embodiment 3)

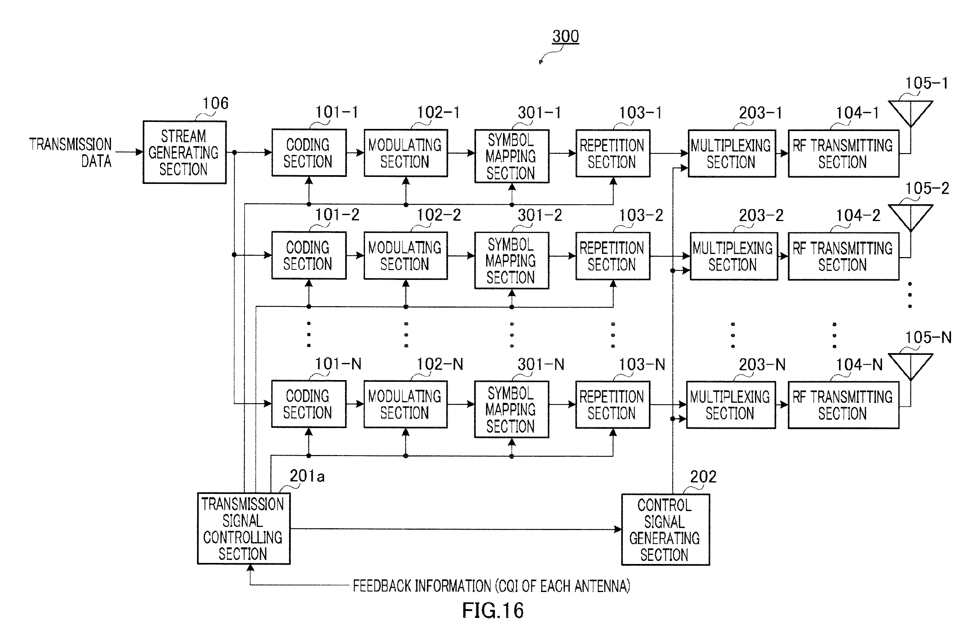

FIG.16 is a block diagram showing a main configuration of radio transmitting apparatus 300 according to Embodiment 3 of the present invention. This radio transmitting apparatus 300 has the same basic configuration as radio transmitting apparatus (see FIG.10) described in Embodiment 2, and the same components will be assigned the same reference numerals and redundant descriptions will be omitted. Further, although the basic operation is the same as in Embodiment 2, components having differences in detail will be distinguished by assigning alphabet "a" to the same number and will be described as appropriate.

One major difference from Embodiment 2 is that symbol mapping sections 301-1 to 301-N are added.

Symbol mapping sections 301-1 to 301-N map modulated symbols according to the symbol mapping pattern of each stream determined in transmission signal controlling section 201a. That is, signals of a higher degree of significance are mapped in repetition symbols or symbols in a higher stream where repetition symbols are mapped. By this means, it is possible to improve reception characteristics and throughput.

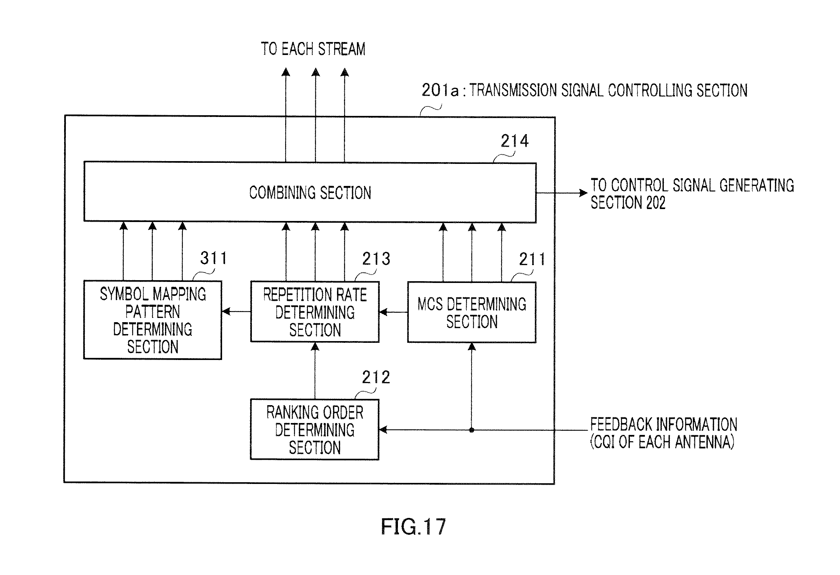

FIG.17 is a block diagrams showing a main configuration in above transmission signal controlling section 201a.

Symbol mapping pattern determining section 311 determines the mapping pattern of symbols in each stream using information of the repetition rate of each stream determined in repetition rate determining section 213. In this case, the mapping patterns include, for example, preferentially mapping the systematic bits or symbols of higher M-ary modulation values in repetition symbols or in symbols in a higher stream where repetition symbols are mapped. Then, the mapping patterns determined in symbol mapping pattern determining section 311 are transmitted to the radio receiving apparatus as control information with MCS information and repetition rate information.

Repetition is carried out as a means for improving error robustness in Embodiments 1 and 2. Repetition symbols have a feature that, by carrying out symbol combination in the radio receiving apparatus, the SNR improves compared to symbols which are not repeated, and errors are less likely to occur. In this way, with the present embodiment, symbols of a high degree of significance are mapped in these repetition symbols.
Data of a high degree of significance includes, for example, systematic bits of turbo code and signals of high M-ary modulation Values.

A case where systematic bits of turbo code are mapped in repetition symbols will be described as an example. Assume that the repetition rate of each stream is determined as in Embodiment 1 or Embodiment 2.

Turbo coding of transmission data produces systematic bits and parity bits. If these bits are modulated separately, symbols obtained by modulating the systematic bits and symbols obtained by modulating the parity bits, are obtained. Then, repetition is carried out by preferentially mapping the symbols obtained by modulating the systematic bits in repetition symbols.

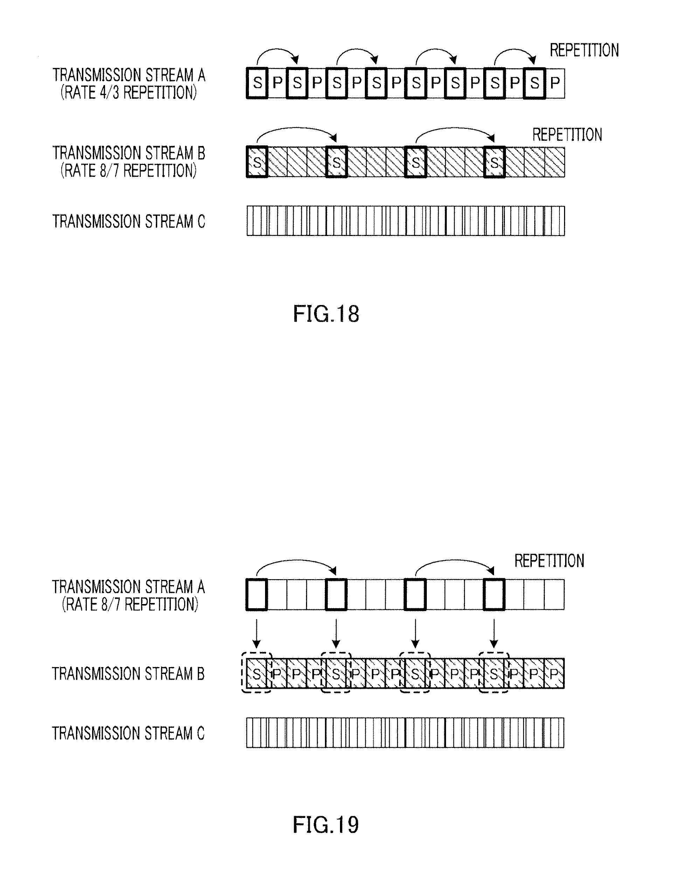

FIG.18 shows an example of carrying out repetition in this way. As shown in this figure, with the present embodiment, in each stream, symbols obtained by modulating the systematic bits are mapped in repetition symbols.

If the number of repetition symbols is greater than the number of the symbols obtained by modulating the systematic bits, first, the symbols obtained by modulating the systematic bits are mapped in repetition symbols, and, next, the symbols obtained by modulating the parity bits are mapped in the rest of the repetition symbols and symbols which are not repeated. In contrast with this, if the number of repetition symbols is smaller than the number of the symbols obtained by modulating the systematic bits, first, the symbols and which are equivalent to the number of repetition symbols and which are obtained by modulating the systematic bits are mapped in repetition symbols, and, next, the rest of the systematic bits and the symbols obtained by modulating parity bits are mapped in symbols which are not repeated.

In this way, by preferentially mapping symbols obtained by modulating systematic bits in repetition symbols and carrying out repetition, the SNR of systematic bits improves by symbol combination and consequently the bit likelihood improves. Consequently, it is possible to improve the decoding characteristics.

Further, if signals of a higher M-ary modulation value are mapped in repetition symbols, there is an advantage of improving throughput compared to the case where the M-ary modulation value is the same between streams. Further, there is also an advantage of preventing a decrease in throughput due to repetition.

Further, in symbols in a higher stream where repetition symbols are mapped, errors resulting from error propagation from higher streams are less likely to occur compared to symbols where repetition symbols are not mapped. Then, by mapping symbols with a high degree of significance in symbols where repetition symbols are mapped to a higher stream, it is possible to reduce the error rate. Data of a high degree of significance includes, for example, the above described systematic bits of turbo code or signals of high M-ary modulation values.

FIG.19 shows an example where systematic bits are mapped in symbols in a higher stream where repetition symbols are mapped. Assume that the repetition rate of each stream is determined as in Embodiment 1 or Embodiment 2.

Turbo coding of transmission data produce systematic bits and parity bits. If these bits are modulated separately, symbols obtained by modulating the systematic bits and symbols obtained by modulating the parity bits, are obtained. Then, as shown in this figure, in a higher stream, symbols obtained by modulating systematic bits and symbols obtained by modulating parity bits, are mapped. The mapping methods include preferentially mapping systematic bits in repetition symbols, as described above. Further, in a lower stream, symbols obtained by modulating systematic bits are preferentially mapped in the symbols where repetition symbols are mapped in the higher stream.

If the number of symbols where repetition symbols are mapped in a higher stream is greater than the number of the symbols obtained by modulating the systematic bits, first, the symbols obtained by modulating the systematic bits are mapped in symbols where repetition symbols are mapped in a higher stream, and, next, the symbols obtained by modulating the parity bits are mapped in the rest of symbols where repetition symbols are mapped in a higher stream and symbols where repetition symbols are not mapped. By contrast with this, if the number of symbols where repetition symbols are mapped in a higher stream is smaller than the number of the symbols obtained by modulating systematic bits, first, the symbols which are equivalent to the number of the symbols which are obtained by modulating systematic bits and where repetition symbols are mapped in a higher stream are mapped in the symbols where repetition symbols are mapped in a higher stream, and, next, the symbols obtained by modulating the rest of the systematic bits and the symbols obtained by modulating parity bits are mapped in symbols where repetition symbols are not mapped in a higher stream.

In this way, by preferentially mapping symbols obtained by modulating systematic bits in symbols where repetition symbols are mapped in a higher stream and carrying out repetition, errors resulting from error propagation from a higher stream are less likely to occur.
Consequently, there is an advantage of increasing the bit likelihood of systematic bits and improving the decoding characteristics. Further, if signals of a higher M-ary modulation value are mapped in symbols in a higher stream where repetition symbols are mapped, there is an advantage of improving throughput compared to the case where the M-ary modulation value is the same between streams.

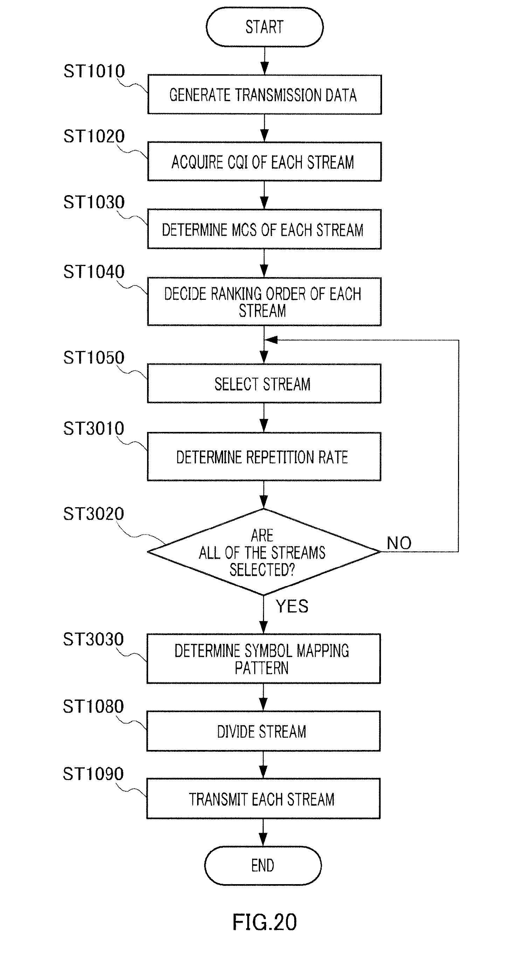

Next, the radio transmitting method according to the present embodiment will be described using the flowchart shown in FIG.20. Further, description of the same steps as in the flowchart of Embodiment 1 will be omitted.

Differences include that the steps of determining the repetition rates of individual streams in ST3010, deciding whether or not all of the streams have been processed in ST3020, and then determining the symbol mapping patterns (ST3030), are added.

In ST3030, the symbol mapping pattern of each stream is determined using the repetition rate of each stream. As described above, the mapping patterns of individual streams include, for example, a mapping pattern of preferentially mapping symbols obtained by modulating systematic bits or symbols of high M-ary modulation values in repetition symbols or symbols in a higher stream where repetition symbols are mapped.

Next, the radio receiving apparatus according to the present embodiment supporting above radio transmitting apparatus 300 will be described. However, the basic configuration of radio transmitting apparatus 300 is the same as in radio receiving apparatus 250 described in Embodiment 2, and so illustration and description thereof will be omitted and only symbol combination controlling section 252a which is a different component from Embodiment 2 will be described.

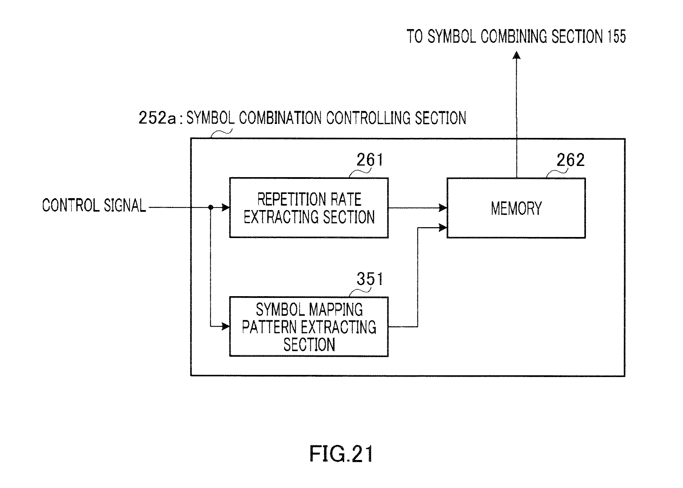

FIG.21 is a block diagram showing a main configuration in symbol combination controlling section 252a.

Symbol mapping pattern extracting section 351 extracts the symbol mapping pattern of each stream from control signals, and memory 262 stores this symbol mapping pattern until transmitted from the radio transmitting apparatus.

As described above, according to the present embodiment, data of a high degree of significance is mapped in repetition data. By this means, an error is not likely to occur in repeated data compared to other data, and these items of data of a high degree of significance can be transmitted in a reliable manner.

Further, according to the present embodiment, data of a high degree of significance is mapped in data where data in a higher stream to be repeated is mapped. By this means, errors resulting from error propagation are less likely to occur in this data compared to other data, and data of a high degree of significance can be transmitted in a reliable manner.

### (Embodiment 4)

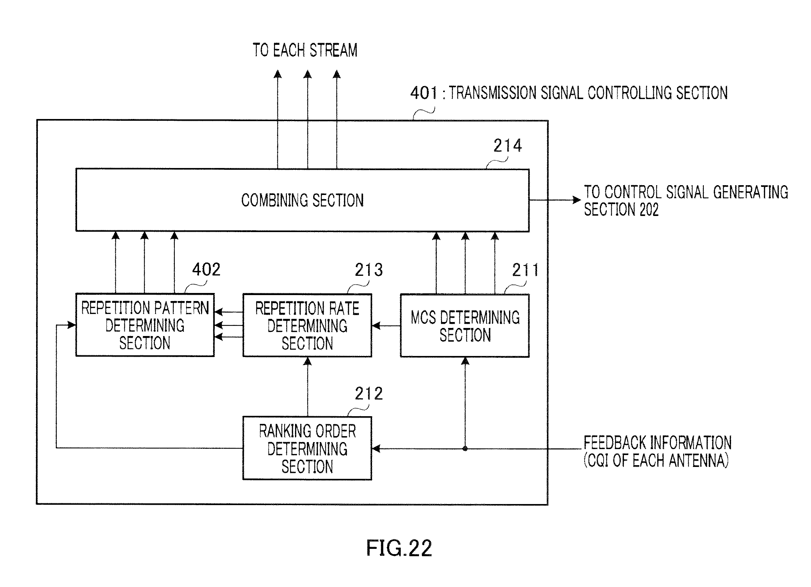

FIG.22 is a block diagram showing a main configuration of transmission signal controlling section 401 according to Embodiment 4 of the present invention. Further, the configuration of the radio transmitting apparatus according to the present embodiment is the same as radio transmitting apparatus 200 described in Embodiment 2, and so only transmission signal controlling section 401 which is a different configuration is shown.

Transmission signal controlling section 401 has the same basic configuration as transmission signal controlling section 201 (see FIG.11) described in Embodiment 2, and so the same components will be assigned the same reference numerals and redundant descriptions will be omitted.

The present embodiment differs from Embodiment 2 in adding repetition pattern determining section 402, so that, by changing the repetition mapping pattern on a per stream basis, a unique advantage is produced on a per stream basis and the reception characteristics are improved.

Repetition pattern determining section 402 determines the repetition pattern of each stream using the repetition rate of each stream determined in repetition rate determining section 213 and the ranking order of each stream determined in ranking order determining section 212. In this case, the repetition patterns include, for example, mapping repetition symbols such that correlation decreases in a higher stream and mapping repetition symbols such that correlation increases in a lower stream.

Repetition is carried out as a means for improving error robustness with Embodiments 1 and 2. However, by changing the repetition pattern according to the ranking order of each stream, it is possible to produce a unique advantage per stream. With the SIC receiving scheme, spatial diversity gain cannot be achieved in a higher stream, and it is possible to improve reception characteristics by achieving spatial diversity or frequency diversity by repetition. By contrast with this, in a lower stream, spatial diversity gain can be achieved and the receiving conditions improve, so that carrying out in-phase combination of repetition symbols produces a greater advantage of improving the received SNR, than diversity gain by repetition.

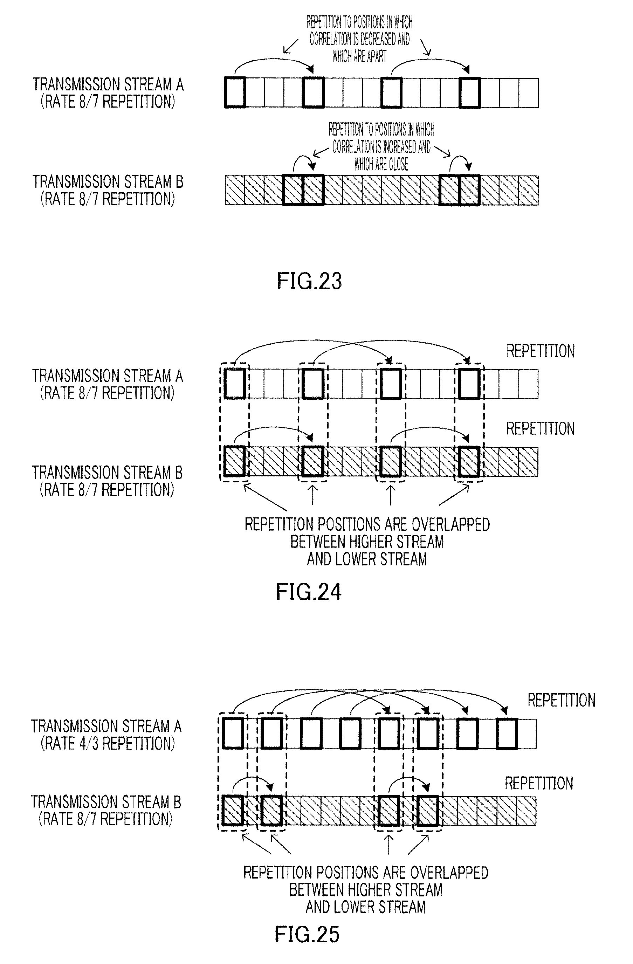

An example where repetition patterns are changed according to the orders of streams will be described.
In a higher stream, repetition is carried out in a mapping pattern that decreases correlation, so that diversity gain by repetition is achieved at more ease. By contrast with this, in a lower stream, repetition is carried out in a mapping pattern that increases correlation, so that in-phase combination can be carried out by making the variations between repetition symbols little. FIG.23 shows examples of these mapping patterns. As shown in this figure, in the higher stream, a plurality of repetition symbols are mapped in positions distant from each other such that correlation decreases. On the other hand, in the lower stream, a plurality of repetition symbols are mapped in positions close to each other such that correlation increases. By this means, it is possible to achieve diversity gain in the higher stream. Further, in the lower stream, spatial diversity gain can be obtained and the receiving conditions improve, so that it is possible to improve the SNR by in-phase combination. Consequently, the overall characteristics improve, thereby improving throughput.

Further, examples of mapping that decrease correlation include a method of mapping in symbols distant from each other (in the time domain) such that time correlation decreases or a method of mapping in frequencies distant from each other (in the frequency domain) such that frequency correlation decreases.

Further, other repetition mapping patterns include overlapping repetition symbols between a higher stream and a lower stream. According to this mapping pattern, errors occur independently between streams, so that the effect of error correction in the higher stream can be reflected in the lower stream in a reliable manner, and, consequently, errors are less likely to occur in the lower stream.

For example, FIG.24 shows mapping patterns where the repetition rate of the higher stream and the repetition rate of the lower stream are the same.

Further, FIG.25 shows a mapping pattern where the repetition rate of a higher stream and the repetition rate of a lower stream are different. In this example of this figure, repetition symbols in the lower stream are mapped in part of the repetition symbols in the higher stream.

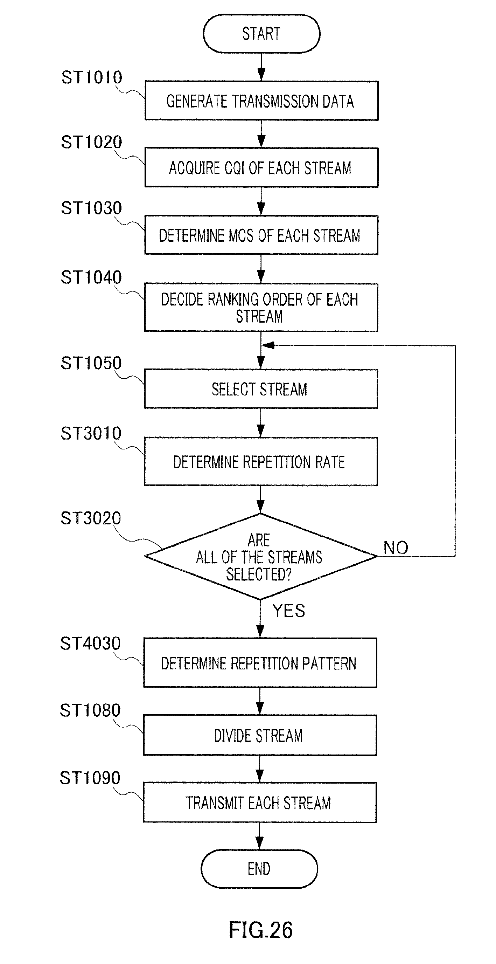

Next, the radio transmitting method according to the present embodiment will be described using the flowchart shown in FIG.26. Further, the radio transmitting method according to the present embodiment is basically the same as in steps of the radio transmitting method described in Embodiment 3, and so the same steps will be assigned the same reference numerals and redundant descriptions will be omitted.

Differences include that the repetition rate of each stream is determined in ST1050 to ST3020 and the repetition pattern is determined in ST4030. In ST4030, the repetition pattern of each stream is determined using both of the ranking orders and repetition rates of individual streams. As described earlier, the repetition patterns of streams include, for example, mapping repetition symbols in a higher stream such that correlation decreases and mapping repetition symbols in a lower stream such that correlation increases.

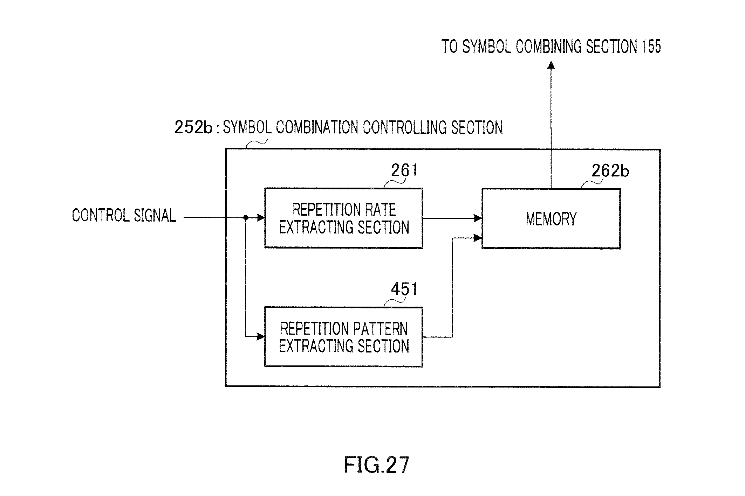

Next, symbol combining controlling section 252b in the radio receiving apparatus according to the present embodiment supporting above radio transmitting apparatus 400 will be described. Further, the basic operation is the same as in symbol combination controlling section 252 described in Embodiment 2. FIG.27 is a block diagram showing a main configuration in this symbol combination controlling section 252b.

The present embodiment differs from Embodiment 2 in adding repetition pattern extracting section 451. Repetition pattern extracting section 451 extracts the repetition pattern of each stream from control signals inputted. Memory 262b stores the repetition rate extracted by repetition rate extracting section 261 and the repetition pattern extracted by repetition pattern extracting section 451 until the transmission timing of the radio transmitting apparatus.

In this way, according to the present embodiment, repetition is carried out with a mapping pattern where correlation is decreased in a higher stream and repetition is carried out with a mapping pattern where correlation is increased in a lower stream. By this means, it is possible to achieve diversity gain in a higher stream. Further, in a lower stream, spatial diversity can be achieved and the receiving conditions improve, so that it is possible to improve the SNR by carrying out in-phase combination. Consequently, the overall characteristics improve, which then improves communication system throughput.

Furhter, according to the present embodiment, the same repetition mapping pattern is used in a higher stream and in a lower stream. By this means, an effect of error correction in a higher stream can be reflected in a lower stream in a reliable manner, and so errors resulting from error propagation are not likely to occur in a lower stream.

Further, Embodiment 3 and Embodiment 4 can be combined. The transmission signal controlling section of the radio transmitting apparatus has both the symbol mapping pattern determining section and the repetition pattern determining section and therefore can determine the symbol mapping patterns for mapping modulated symbols in each stream and determine the repetition patterns for mapping repetition symbols. By this means, in each stream, it is possible to achieve the advantage of Embodiment 4 by means of repetition patterns and achieve the advantage of Embodiment 3 by means of symbol mapping patterns.

### (Embodiment 5)

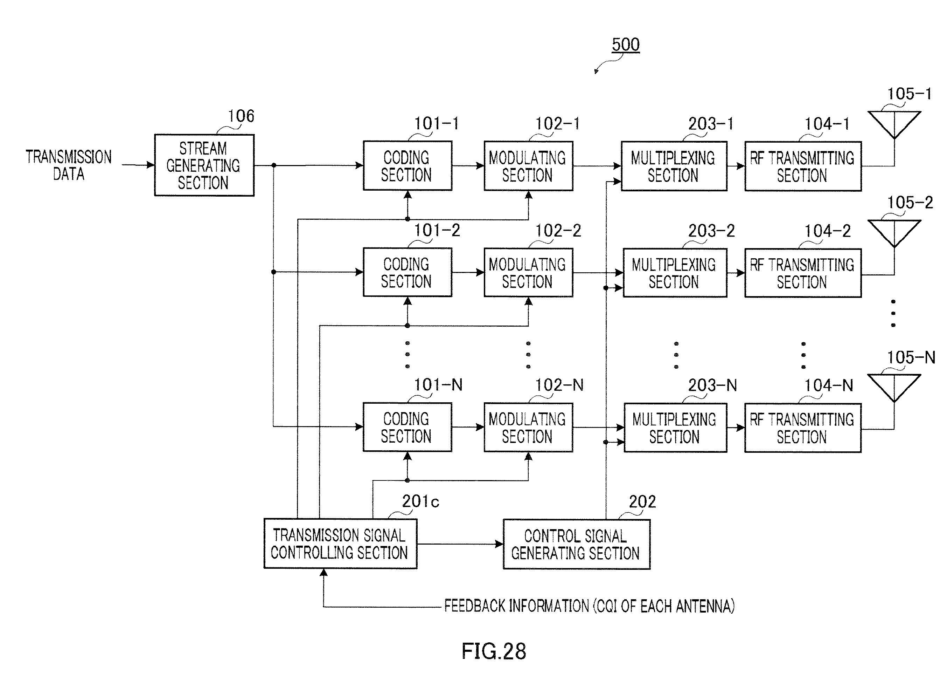

FIG. 28 is a block diagram showing radio transmitting apparatus 500 according to Embodiment 5 of the present invention. Further, this radio transmitting apparatus 500 has the same basic configuration as in radio transmitting apparatus 200 (see FIG.10) described in Embodiment 2, and so the same components will be assigned the same reference numerals and redundant descriptions will be omitted. Further, although the operation of radio transmitting apparatus 500 is basically the same as in Embodiment 2, components having differences in detail will be distinguished by assigning alphabet "c" to the same number and will be described as appropriate.

With the present embodiment, higher streams are switched to MCS's of greater error robustness and transmitted, so that errors resulting from error propagation are less likely to occur and it is possible to prevent a decrease in throughout due to improvement of error robustness in lower streams. Then, changes with the MCS of each stream are determined based on the ranking order.

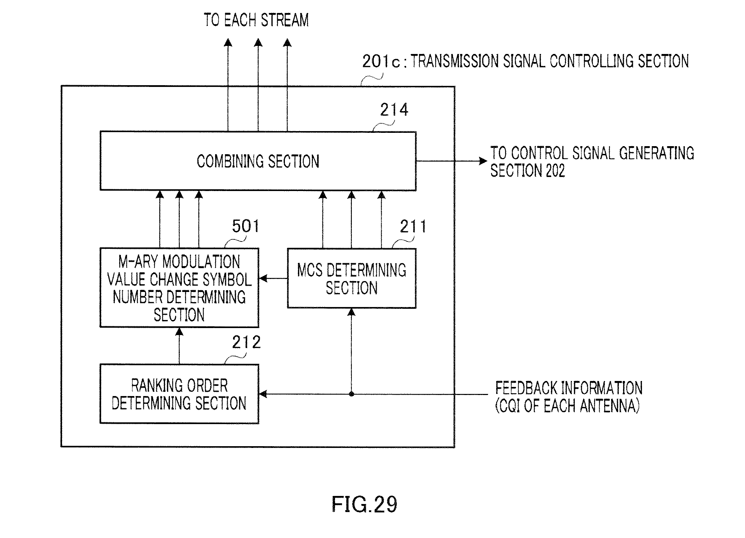

Part of the operation of transmission signal controlling section 201c of radio transmitting apparatus 500 is different. FIG.29 is a block diagram showing a main configuration in transmission signal controlling section 201c.

Transmission signal controlling section 201c further has M-ary modulation value changed symbol number determining section 501. This M-ary modulation value changed symbol number determining section 501 determines the total number of symbols (i.e. the number of symbols) for changing the M-ary modulation value in each stream using the ranking orders of the individual streams. The methods of determining the number of symbols include, for example, using the relationships between ranking orders and total numbers of symbols for changing the M-ary modulation value. Then, for each stream, modulating sections 102-1 to 102-N select the numbers of symbols matching the numbers of symbols determined in M-ary modulation value changed symbol number determining section 501 and decreases the M-ary modulation values for these symbols and modulates these symbols. Further, the total number of symbols for which the M-ary modulation value has been changed and the symbol mapping pattern are transmitted to the radio receiving apparatus as control information.

In this way, a method of switching to MCS's of greater error robustness is used as a means for improving error robustness. Specific methods of switching to MCS' s of greater error robustness include decreasing the coding rate and decreasing the M-ary modulation value. Further, where an MCS table showing the correspondences between the combinations of CQI's that are fed back, coding rates and modulation schemes is used, a method of finding an MCS matching the required error rate based on the CQI and selecting an MCS of error robustness several levels higher than the first MCS, is possible. If adaptive modulation is carried out on a per stream basis, an MCS matching the required error rate is selected on a per stream basis from the MCS table based on the CQI that is fed back. Then, in a higher stream, an MCS of error robustness several levels higher than the above selected MCS is selected, thereby making errors less likely in the higher stream. By this means, in lower streams, errors resulting from errors in higher streams are less likely to occur, so that the error robustness needs not be improved.

There is, for example, the following method as a method of selecting the MCS of greater error robustness for higher streams. First, in each stream, the MCS is selected from the MCS table based on CQI's that are fed back. Further, the ranking order of each stream is determined based on these CQI's. By changing the MCS according to the ranking order using the relationships shown in, for example, table 6, it is possible to improve the error robustness of higher streams.

**[Table 6]**

| Ranking order | Relationship of levels of improvement of error robustness of MCS |
|---|---|
| 1 | 2 |
| 2 | 1 |
| 3 | 0 |
| 4 | 0 |

For example, for the stream of the first ranking order, the MCS of the error robustness two levels higher than the MCS selected based on the feedback CQI's is selected. Further, for the stream of the second rank, the MCS of greater error robustness by one level, is selected. Furthermore, errors are thus made less likely to occur in the higher streams, and, for the streams of the third rank and the fourth rank, the MCS's selected based on feedback CQI's are used as is.

In this way, for a higher stream, by selecting an MCS of greater error robustness than the MCS selected based on the CQI, it is possible to prevent errors resulting from error propagation. Further, error robustness needs not be improved in lower streams, so that, by carrying out transmission based on the MCS selected based on the CQI, a significant decrease in the throughput of the entire streams is prevented.

Further, the following method is also available as a means for improving error robustness upon employing the method of decreasing the M-ary modulation value. That is, if the M-ary modulation value is decreased for an entire stream, the throughput of the stream decreases significantly. Then, by decreasing the M-ary modulation value for only part of the symbols in a stream, it is possible to prevent an extreme decrease in throughput and improve the error robustness. Then, by increasing the ratio of symbols for decreasing the M-ary modulation value in higher streams, it is possible to prevent error in higher streams. By this means, errors resulting from an error in a higher stream are less likely to occur in lower streams, so that it is not necessary to improve error robustness.

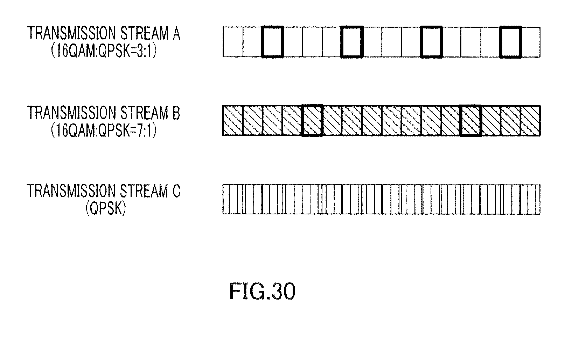

For example, FIG.30 shows a configuration of streams where the M-ary modulation value is decreased for only part of the symbols in a stream. In this figure, the number of streams is three, and the ranking orders of the streams are stream A, stream B and stream C, in descending order of quality.

The modulation scheme of transmission stream A based on the CQI is 16QAM. However, the M-ary modulation value is decreased with respect to one of the fours symbole, and this symbol has its modulation scheme changed to QPSK and transmitted. Further, the modulation scheme of transmission stream B based on the CQI is 16QAM similar to transmission stream A. However, the M-ary modulation value is decreased with respect to one of eight symbols, and this symbol has its modulation scheme changed to QPSK and transmitted. Here, stream B is a lower stream of stream A, and so the proportion of the symbols for changing the M-ary modulation value is smaller (that is, 1/4 in stream A and 1/8 in stream B). Then, transmission stream C is transmitted using the modulation scheme based on the CQI as is.

In this way, if the M-ary modulation value is decreased for only part of the symbols in a stream, by increasing for higher streams the ratio of the symbols for decreasing the M-ary modulation value, it is possible to prevent errors resulting from error propagation. Further, it is not necessary to improve the error robustness of the lower stream or decrease M-ary modulation value of the symbols, thereby preventing a significant decrease in the throughput of the entire stream.

Further, there is a method of determining the ratio of symbols in each stream for decreasing the M-ary modulation value, based on the ranking order. For example, there is the following method. First, for each stream, the MCS is determined with reference to an MCS table based on the CQI that is fed back and the ranking order of the stream is determined. According to this ranking order, the number of symbols for decreasing the M-ary modulation value is determined using from relationships in following table 7.

**[Table 7]**

| Ranking order | The number of symbols for which M-arymodulation value is decreased |
|---|---|
| 1 | 1/4 |
| 2 | 1/8 |
| 3 | 0 |
| 4 | 0 |

For example, for the stream of the first ranking order, the M-ary modulation value is decreased in one of the four symbols. Furhter, for the stream of the second rank, the M-ary modulation value is decreased in one of the eight symbols. Furthermore, the streams of the third rank and fourth rank are transmitted using the modulation schemes based on the CQI's as is.

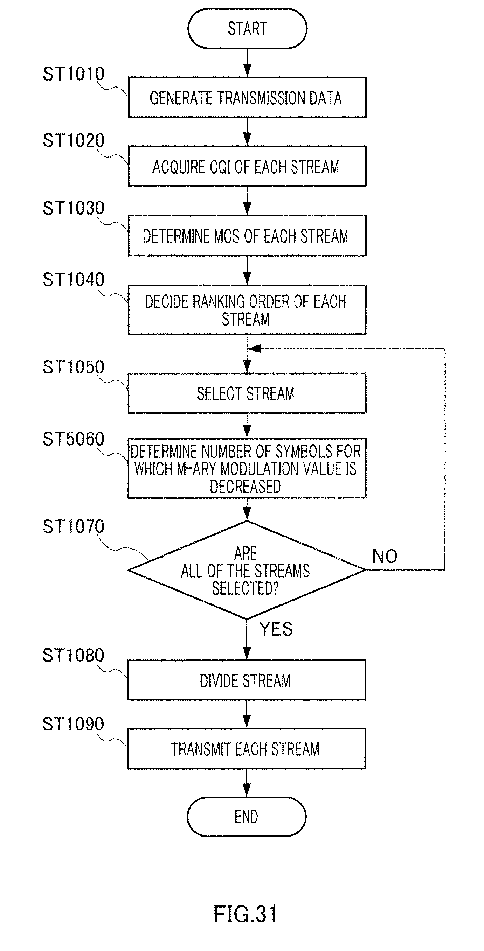

Next, the radio transmitting method according to the present embodiment will be described using the flowchart shown in FIG.31. Further, the basic steps of the ratio transmitting method according to the present embodiment are the same as the radio transmitting method described in Embodiment 1, and so the same reference numerals are assigned to the same steps and redundant descriptions will be omitted.

The difference is that, instead of a step of determining the repetition rate (ST1060), a step of determining the number of symbols for which the M-ary modulation value is executed. In ST5060, the number of symbols for decreasing the M-ary modulation value is determined using the raking order of each stream. For example, using the relationships shown in above table 7, the number of symbols for decreasing the M-ary modulation value is determined.

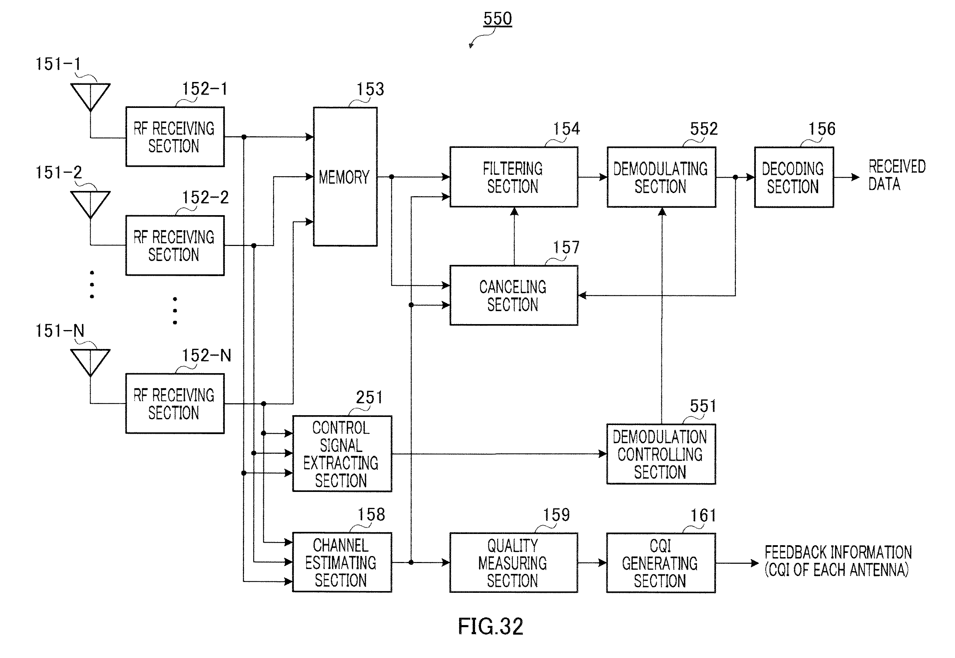

Next, radio receiving apparatus 550 according to the present embodiment supporting above radio transmitting apparatus 500 will be described. FIG.32 is a block diagram showing a main configuration of radio receiving apparatus 550.

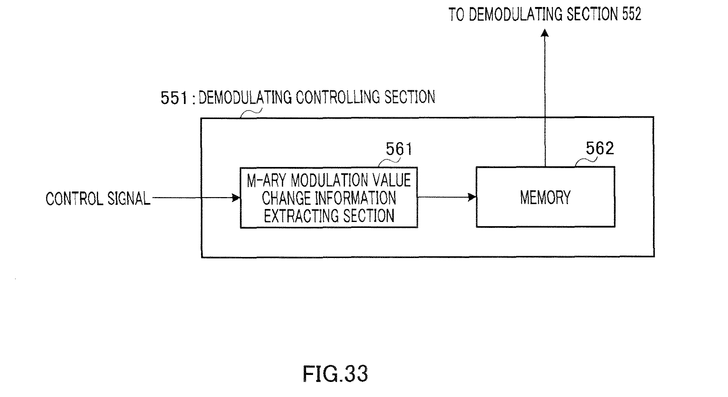

The basic configuration is the same as radio receiving apparatus 250 described in Embodiment 2. The differences include that demodulation controlling section 551 and demodulating section 552 are provided. FIG.33 is a block diagram showing a main configuration in demodulation controlling section 551.

Demodulation controlling section 551 has M-ary modulation value change information extracting section 561 and memory 562. M-ary modulation value change information extracting section 561 extracts information such as the number of symbols for which theM-arymodulation value has been changed in each stream and symbol mapping pattern, from inputted control information. Memory 562 stores and outputs this information at the timing of the radio transmitting apparatus, to demodulating section 552.

Demodulating section 552 demodulates the symbols of each stream based on the M-ary modulation value change information outputted from demodulation controlling section 551.

In this way, according to the present embodiment, as a means for improving error robustness, the M-ary modulation value is decreased in part of a stream and the ratio of data for decreasing the M-ary modulation value is increased for higher streams. By this means, it is possible to reduce the processing delay in the radio receiving apparatus and prevent errors resulting from error propagation in lower streams. Consequently, it is possible to prevent a decrease in communication system throughput.

Further, according to the method of the present embodiment of decreasing the M-ary modulation value for part of the symbols in a stream, it is possible to achieve the same advantage as in Embodiment 3 by, similar to Embodiment 3, mapping data of a high degree of significance in symbols in which the M-ary modulation value is decreased or mapping data of a high degree of significance in symbols in a higher stream where symbols in which the M-ary modulation value is decreased are mapped. Further, similar to Embodiment 4, by changing the patterns of mapping symbols for which the M-ary modulation value is decreased, between streams, it is possible to achieve the same advantage as in Embodiment 4.

Embodiments of the present invention have been described.

Further, the radio communication system, radio receiving apparatus, radio transmitting apparatus and CQI reporting method according to the present invention are not limited to the above embodiments and can be implemented in a variety of modifications.

Further, although, with the present invention, the SINR and SNR are used as examples of received quality, it is equally possible to use the SIR, CIR, CNR, CINR, RSSI, received intensity, received power, interference power, error rate, transmission rate, throughput, the amount of interference and MCS that achieves the required error rate.

Further, although cases have been described with the present embodiment as examples where received quality is quantized and provided in the form of CQI, received quality may be represented by, for example, CSI (Channel State Information).

The scalable decoding apparatus according to the present invention can be provided in a communication terminal apparatus and base station apparatus in a mobile communication system, so that it is possible to provide a communication terminal apparatus, base station apparatus and mobile communication system having same advantages and effects as described above.

Also, although cases have been described with the above embodiment as examples where the present invention is configured by hardware, the present invention can also be realized by software. For example, it is possible to implement the same functions as in the radio receiving apparatus and radio transmitting apparatus according to the present invention by describing algorithms of the CQI reporting methods according to the present invention using the programming language, and executing this program with an information processing section by storing in memory.

Each function block employed in the description of each of the above embodiments may typically be implemented as an LSI constituted by an integrated circuit. These may be individual chips or partially or totally contained on a single chip.

"LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2006-055516, filed on March 1, 2006, including the specification, drawings and abstract, is incorporated herein by reference in its entirety

### Industrial Applicability

The radio receiving apparatus, radio transmitting apparatus and CQI reporting method according to the present invention are applicable for use in adaptive modulation of each stream in a system employing the SDM scheme.

## Claims

1. A radio transmitting apparatus comprising:
a ranking section that ranks a plurality of transmission streams based on received quality in a radio receiving apparatus; and
a setting section that sets error robustness of a transmission stream ranked higher quality greater than error robustness of a transmissions stream ranked lower quality.

2. The radio transmitting apparatus according to claim 1, wherein the setting section sets the error robustness of the transmission stream ranked higher quality by repeating the transmission stream by a high repetition rate.

3. The radio transmitting apparatus according to claim 2, wherein the setting section sets a repetition rate of the transmission stream ranked lower quality to a repetition rate matching required quality.

4. The radio transmitting apparatus according to claim 2, wherein the setting section determines the repetition rate of the transmission stream ranked higher quality according to error robustness of modulation and coding scheme parameters of the transmission stream.

5. The radio transmitting apparatus according to claim 2, wherein the setting section repeats part of the transmission stream ranked higher quality by the high repetition rate and assigns significant data to the part repeated by the high repetition rate.

6. The radio transmitting apparatus according to claim 2, wherein the setting section repeats part of the transmission stream ranked higher quality by the high repetition rate and assigns significant data to part of the transmission stream ranked lower quality of the same position as the part of the transmission stream ranked higher quality repeated by the high repetition rate.

7. The radio transmitting apparatus according to claim 2, further comprising a mapping section that maps repetition symbols of the transmission stream ranked higher quality in a distributed manner and maps repetition symbols of the transmission stream ranked lower quality in a concentrated manner.

8. The radio transmitting apparatus according to claim 2, further comprising a mapping section that applies a same pattern to a repetition mapping pattern for the transmission stream ranked higher quality and a repetition mapping pattern for the transmission stream ranked lower quality.

9. The radio transmitting apparatus according to claim 2, wherein the setting section sets error robustness of the transmission stream ranked higher quality greater by decreasing an M-ary modulation value for part of data of the transmission stream.

10. A communication terminal apparatus comprising the radio transmitting apparatus according to claim 1.

11. A base station apparatus comprising the radio transmitting apparatus according to claim 1.

12. A radio transmitting method comprising:
ranking a plurality of transmission streams based on received quality in a radio receiving apparatus; and
setting error robustness of a transmission stream ranked higher quality greater than error robustness of a transmission stream ranked lower quality.
